# EUROPÄISCHE PATENTSCHRIFT

(11) **EP 2 477 718 B1**
(45) Veröffentlichungstag und Bekanntmachung des Hinweises auf die Patenterteilung: **26.03.2014**
(21) Anmeldenummer: 10754454.6
(22) Anmeldetag: 07.09.2010
(51) Int. Cl.: B01D 46/52

(54) **FILTERELEMENT UND FILTER ZUR FILTRIERUNG VON FLUIDEN**
FILTER ELEMENT AND FILTER FOR THE FILTRATION OF FLUIDS
ELEMENT DE FILTRATION ET FILTRE POUR LA FILTRATION DES FLUIDES

(30) Priorität: 07.09.2009 DE 102009040202
(43) Veröffentlichungstag der Anmeldung: 25.07.2012
(73) Patentinhaber: Mann + Hummel GmbH, 71638 Ludwigsburg (DE)
(72) Erfinder: MBADINGA-MOUANDA, Gelase, 74321 Bietigheim-Bissingen (DE); GEHWOLF, Klaus, 94437 Mamming (DE)
(86) Internationale Anmeldenummer: PCT/EP2010/063133
(87) Internationale Veröffentlichungsnummer: WO 2011/027001

(56) Entgegenhaltungen:
- DE-A1- 10 113 077
- US-A- 5 804 014
- US-A1- 2003 075 500

## Beschreibung

### Technisches Gebiet

Die Erfindung betrifft einen Filter zur Filtrierung von Fluiden, insbesondere von Gasen, insbesondere von Ansaugluft, Kraftstoff oder Motoröl insbesondere einer Brennkraftmaschine insbesondere eines Kraftfahrzeugs, oder Umgebungsluft zur Einleitung in Belüftungssysteme von Gebäuden oder Fahrzeugen, mit einem Filterelement aus einem zickzackförmig gefalteten Filtermedium mit einer Rohseite und einer Reinseite.

### Stand der Technik

Aus dem Stand der Technik sind verschiedene Filter mit gefalteten Filtermedien bekannt, z.B. aus der US 2003/07550 A1, der DE 10113077 A1 und der US 5804014 A. Bei den bekannten flachen, nicht zylindrischen gefalteten Filterelementen sind die erreichbaren Faltenhöhen z. B. aus Stabilitätsgründen begrenzt.

Der Erfindung liegt die Aufgabe zugrunde, ein stabiles Filterelement mit möglichst großen Faltenhöhen und möglichst hoher Filtereffizienz zu schaffen.

### Offenbarung der Erfindung

Die Aufgabe wird erfindungsgemäß dadurch gelöst, dass auf der Rohseite eine Mehrzahl von länglichen Senken in das Filtermedium geformt ist, die sich zwischen rohseitigen Faltenspitzen und rohseitigen Faltengründen etwa senkrecht zu Faltkanten des Filtermediums erstrecken und auf der Reinseite entsprechende Erhebungen realisieren, derart, dass sich in einem rohseitigen Faltenzwischenraum jeweils zwei Senken auf den beiden den Faltenzwischenraum begrenzenden Mediumabschnitten direkt gegenüber liegen und jeweils einen Strömungskanal mit bilden.

Erfindungsgemäß sind also die rohseitigen Faltenzwischenräume mittels Senken an mehreren Stellen kanalartig aufgeweitet. Durch die Strömungskanäle wird der Strömungsverlauf des zugeführten Fluids zur Verbesserung der Filtrationseffizienz, der Verkleinerung von Druckverlusten am Filterelement und Erhöhung der Beladungskapazität optimiert. Das zu filtrierende Fluid wird so gleichmäßig zu den Faltengründen geleitet, so dass die Anströmung der Oberfläche des Filtrationsmediums verbessert wird. Dies führt zu einer gleichmäßigen Beladung der Rohseite mit abgeschiedenen Fremdstoffen. Die Beladungskapazität des Filterelements wird so erhöht, was die Standzeiten verlängert. Ferner stabilisieren die zu Senken und zu Erhebungen geformten Bereiche des Filtermediums das gefaltete Filtermedium. So können auch im Verhältnis zum Faltenabstand hohe Filterelemente stabil aufgebaut werden.

Erfindungsgemäß ist im Zentrum wenigstens einer der Senken ein Stützrücken geformt, welcher sich entlang der Senke und der entsprechenden Erhebung erstreckt und auf der Rohseite eine Vertiefung und auf der Reinseite eine Erhöhung bildet. Der Stützrücken sorgt für eine zusätzliche mechanische Stabilisierung des Filtermediums, wodurch die Gefahr des Kollabierens, d. h. des Aufeinanderliegens benachbarter Filtermedienabschnitte im Bereich der Faltkante verringert wird.

Zusätzlich kann vorteilhafterweise auf der Reinseite im Zentrum wenigstens einer der Erhebungen ein Klebstoffabschnitt angeordnet sein, welcher sich entlang der Erhebung erstreckt. Der Klebstoffabschnitt, welcher sich vorzugsweise über die ganze Höhe des Faltenzwischenraums erstreckt, stabilisiert den entsprechenden Filtermediumabschnitt. Er reduziert die Gefahr des Einknickens des Filtermediumabschnitts und das Kollabierens der Falten insbesondere beim Auftreten von Unterdrucken.

Bei einer weiteren vorteilhaften Ausführungsform können sich in einem reinseitigen Faltenzwischenraum jeweils zwei Erhebungen, insbesondere Stützrücken oder Klebstoffabschnitte, auf den beiden den Faltenzwischenraum begrenzenden Mediumabschnitten aneinander abstützen. Insgesamt wird so die mechanische Stabilität des Filterelements verbessert, insbesondere die Komprimierbarkeit der Falten und das Risiko eines Kollapses insbesondere bei Auftreten eines Unterdrucks verringert.

Vorteilhafterweise können die Tiefen der Senken über die Höhe der Falten im Wesentlichen konstant sein. Senken beziehungsweise Erhebungen mit gleichmäßiger Tiefe können einfach realisiert werden.

Alternativ können vorteilhafterweise die Tiefen der Senken von den Faltkanten zu den Faltengründen hin abnehmen. Auf diese Weise werden die so gebildeten rohseitigen Strömungskanäle zu den Faltengründen hin enger, was die Strömung des zu filtrierenden Fluids im Hinblick auf die Filtrationseffizienz, die Druckverluste im Filterelement und die Beladungskapazität positiv beeinflusst.

Bei einer weiteren vorteilhaften Ausführungsform kann zwischen zwei benachbarten Strömungskanälen jeweils wenigstens ein Klebstoffabschnitt auf der Rohseite des Filtermediums angeordnet sein, der etwa senkrecht zu der Richtung der Faltkanten verläuft. Die Klebstoffabschnitte stabilisieren die entsprechenden Filtermediumabschnitte, um ein Einknicken beziehungsweise ein Kollabieren zu verhindern. Außerdem begrenzen die Klebstoffabschnitte die benachbarten Strömungskanäle, was sich positiv auf den Strömungsverlauf auswirkt. Vorteilhafterweise können Klebstoffunterbrechungen vorgesehen sein, die Fluidverbindung zwischen den Strömungskanälen bilden. Durch die Klebstoffunterbrechungen wird ermöglicht, dass ein Druckausgleich zwischen benachbarten Strömungskanälen stattfindet, um das Risiko von Unterdrucken in den Strömungskanälen und ein damit verbundenes Kollabieren der entsprechenden Falten zu verringern.

Vorteilhafterweise kann die Ausdehnung des wenigstens einen Klebstoffabschnitts senkrecht zum Filtermedium variieren, so dass der Klebstoffabschnitt bei dem gefalteten Filtermedium mit seiner dem Filtermedium abgewandten freien Seite an einer entsprechenden freien Seite eines in dem Faltenzwischenraum gegenüberliegenden Klebstoffabschnitts oder an der Oberfläche des gegenüberliegenden Mediumabschnitts flächig anliegen kann. Auf diese Weise stützen die Klebstoffabschnitte die Filtermediumabschnitte ab, so dass das Risiko eines Kollapses verringert wird. Insgesamt wird so die Stabilität des Filterelements verbessert, insbesondere die Komprimierbarkeit des Filterelements verringert. Die Klebstoffabschnitte überspannen die Faltenzwischenräume und verbessern die Begrenzung der Strömungskanäle. Dies wirkt sich vorteilhaft auf die Strömungsverhältnisse aus, wodurch der Druckverlust am Filterelement verringert und die Beladungskapazität verbessert wird.

Bei einer weiteren vorteilhaften Ausführungsform können die Senken und Erhebungen in Form von Rillierungen im ungefalteten Filtermedium realisiert sein, die senkrecht zu den Faltkanten verlaufen. Das Filtermedium kann in einem separaten Herstellungsprozess einfach vorab insbesondere als Meterware mit der entsprechenden Rillierung versehen werden. Alternativ kann das zunächst glatte Filtermedium einer Vorrichtung zugeführt werden, in der die Rillierungen und die Falzlinien eingeprägt werden. Vorzugsweise können im gleichen Produktionsschritt gegebenenfalls die Klebstoffabschnitte aufgebracht werden und das Filtermedium entlang der Faltlinien gefaltet werden.

Bei einer weiteren vorteilhaften Ausführungsform kann auf der Rohseite eine Mehrzahl von länglichen Senken in das Filtermedium geformt sein, die sich zwischen rohseitigen Faltenspitzen und rohseitigen Faltengründen etwa senkrecht zu Faltkanten des Filtermediums erstrecken und auf der Reinseite entsprechende Erhebungen realisieren, derart, dass sich in einem rohseitigen Faltenzwischenraum jeweils zwei Senken auf den beiden den Faltenzwischenraum begrenzenden Mediumabschnitten direkt gegenüber liegen und jeweils einen Strömungskanal mit bilden, wobei der Strömungskanal insbesondere durch zwei Klebstoffspuren, die jeweils zwischen zwei auf dem Filtermedium benachbarten Senken und/oder Erhebungen angeordnet sind, sowie zwei benachbarte Filtermedienabschnitte begrenzt ist. Auf diese Weise können die rohseitigen Faltenzwischenräume mittels Senken an mehreren Stellen kanalartig aufgeweitet werden. Durch die Strömungskanäle wird der Strömungsverlauf des zugeführten Fluids zur Verbesserung der Filtrationseffizienz, der Verkleinerung von Druckverlusten am Filterelement und Erhöhung der Beladungskapazität optimiert. Das zu filtrierende Fluid wird so gleichmäßig zu den Faltengründen geleitet, so dass die Anströmung der Oberfläche des Filtrationsmediums verbessert wird. Dies führt zu einer gleichmäßigen Beladung der Rohseite mit abgeschiedenen Fremdstoffen. Die Beladungskapazität des Filterelements und die Standzeit erhöht. Ferner stabilisieren die zu Senken und zu Erhebungen geformten Bereiche des Filtermediums das gefaltete Filtermedium. So können auch im Verhältnis zum Faltenabstand hohe Filterelemente stabil aufgebaut werden.

In einer Ausführungsform der Erfindung ist das Filterelement aus einem Filtermedium gebildet, welches aus Zellulose, schmelzgeblasenen Fasern, Mikro- oder Nanofasern, gewebten oder gewirkten Fasern, aus einem Vlies oder einer Kombination dieser Stoffe besteht.

In einer Ausführungsform der Erfindung umfasst das Filterelement ein Filtermedium, welches mehrfach wechselseitig, ziehharmonikaartig gefaltet ist. Dabei wird durch das Filtermedium die Rohseite, auf welcher das Filterelement mit dem zu reinigenden Fluid beaufschlagt wird, von der Reinseite getrennt. Entlang der Faltlinien werden an dem Filtermedium abwechseln rohseitige und reinseitige Faltkanten gebildet, welche Faltenspitzen bilden, die jeweils abwechselnd in Richtung der Reinseite und der Rohseite gerichtet sind. Der Abstand zwischen den Ebenen, welche durch die reinseitigen und rohseitigen Faltenspitzen gebildet werden, wird als Faltenhöhe bezeichnet. Der Abstand zwischen zwei reinseitig oder rohseitig benachbarten Faltenspitzen des Filterelements wird als Faltenabstand bezeichnet. Der Faltengrund liegt den Faltenspitzen jeweils auf der anderen Seite des Filtermediums gegenüber, d. h. der Faltengrund ist der durch die jeweilige Faltenspitze eingeschlossene Raum. So befinden sich reinseitige Faltenspitze und rohseitiger Faltengrund an der gleichen Faltkante auf den gegenüberliegenden Seiten des Filtermediums und umgekehrt. Die beiden Ränder des Filtermaterials, welche senkrecht zu den Faltkanten und alternierend zwischen rohseitigen und reinseitigen Faltkanten verlaufen, werden als Stirnränder bezeichnet. Im gefalteten Zustand bilden die Stirnränder zwei gegenüberliegende Stirnseiten. Die Seiten, an welchen sich die Enden des Filtermediums befinden, welche insbesondere parallel zu den Faltkanten verlaufen, werden als Endseiten bezeichnet.

In einer vorteilhaften Ausführungsform beträgt die Faltenhöhe mindestens 50 mm, vorteilhaft 100 mm oder 150 mm und besonders vorteilhaft mindestens 200 mm. In einer weiteren vorteilhaften Ausführungsform weist das Filterelement Faltenhöhen von mindestens 300 mm auf. Hierdurch kann das Filterelement mit besonders großer Filterfläche ausgestattet werden.

In einer Ausführungsform beträgt das Verhältnis von Faltenhöhe zu Faltenabstand mindestens zwischen 50:1 und 180:1, bevorzugt zwischen 100:1 und 160:1, besonders bevorzugt zwischen 120:1 und 140:1.

In einer Ausführungsform beträgt der Faltenabstand zwischen 7,5 mm und 1,8 mm, vorteilhaft zwischen 2,5 mm und 3 mm.

In einer Ausführungsform ist das Filtermedium rilliert oder genoppt, wobei die Noppen beidseitig in das Filtermedium eingebracht sind und im gefalteten Zustand mit dem jeweils gegenüberliegenden Filtermediumabschnitte in Kontakt stehen. Hierdurch wird eine Stabilisierung des Filtermediums erreicht.

Alternativ oder zusätzlich können Einprägungen in das Medium eingebracht werden, welche ein großes Längen/Breiten-Verhältnis aufweisen und sich zwischen Faltenspitzen und Faltengrund erstrecken. Die Einprägungen sind dabei vorteilhaft so ausgestaltet, dass sich im Faltenzwischenraum jeweils zwei oder mehrere Einprägungen auf gegenüberliegenden Mediumabschnitten direkt gegenüber liegen und sich somit eine Einprägung auf der jeweils gegenüberliegenden Einprägung abstützt. Besonders vorteilhaft sind die Einprägungen keilförmig ausgebildet, wobei der Keil je nach Form des Faltenzwischenraumes in Richtung des Faltengrundes abfällt oder zunimmt. Weiter vorteilhaft können die Einprägungen jeweils mit der gegenüberliegenden Einprägung z. B. mit Schmelzklebstoff verklebt sein.

In einer Ausführungsform sind in die Falten Klebstoffspuren, z. B. aus Schmelzklebstoff eingebracht, welche sich zwischen Faltenspitzen und Faltengrund erstrecken. Dabei sind sowohl auf der Reinseite als auch auf der Rohseite Klebstoffspuren eingebracht. Es werde dabei vor dem Aufstellen der einzelnen Falten mindestens zwei Klebstoffspuren zueinander parallel und senkrecht zu der Richtung der Faltkanten auf das Filtermedium aufgebracht.

In einer Ausführungsform sind die Klebstoffspuren nicht durchgehend, sondern in regelmäßigen Abständen unterbrochen.

In einer Ausführungsform erstrecken sich die Klebstoffspuren zwischen Faltenspitze und Faltengrund, sind jedoch auf der Reinseite und/oder der Rohseite regelmäßig unterbrochen.

In einer vorteilhaften Ausführungsform ist die Klebstoffspur rohseitig jeweils mindestens einmal zwischen Faltenspitze und Faltengrund unterbrochen. Die Unterbrechung befindet sich dabei z. B. mittig zwischen Faltenspitze und Faltengrund und weist eine Länge zwischen 10 mm und 80 mm, bevorzugt zwischen 30 mm und 60 mm auf.

In einer vorteilhaften Ausführungsform ist reinseitig eine Unterbrechung der Klebstoffspur vorgesehen, welche die reinseitige Faltenspitze umgibt. Somit sind die Falten reinseitig im Bereich der Faltenspitzen nicht verklebt.

Vorteilhafterweise kann mindestens eine, bevorzugt alle Klebstoffspuren auf der Rohseite einer/den Klebstoffspur(en) auf der Reinseite direkt gegenüber liegen.

In einer vorteilhaften Ausführungsform sind die Klebstoffspuren, welche Unterbrechungen aufweisen, so ausgebildet, dass sich die Unterbrechung der reinseitigen und der rohseitigen Klebstoffspur nicht überschneiden. Damit ist sichergestellt, dass sowohl im Bereich der reinseitigen Faltenspitzen als auch in der Nähe des reinseitigen Faltengrundes eine Überlappung der reinseitigen und rohseitigen Klebstoffspur gebildet ist.

In einer Ausführungsform weisen die mindestens zwei Klebstoffspuren Unterbrechungen auf, welche im gleichen Abstand von Faltenspitzen und Faltengrund angeordnet sind. Die durch die Anfangs- und Endpunkte der einzelnen Klebstoffspurenabschnitte gebildeten Geraden verlaufen auf diese Weise parallel zu den Faltkanten.

In einer alternativen Ausführungsform sind die Anfangs- und Endpunkte der Unterbrechungen der Klebstoffspuren an einer Mehrzahl von Geraden ausgerichtet, welche zueinander parallel verlaufen und mit den Faltkanten einen Winkel von 10-80°, bevorzugt 45 +/-15° bilden.

In einer bevorzugten Weiterbildung verlaufen die Anfangs- und Endpunkte der Unterbrechungen der Klebstoffspuren an mind. zwei Geradenscharen, wobei jede Geradenschar zueinander parallele Geraden umfasst, wobei sich die korrespondierenden Geraden auf dem Filtermedium schneiden, wodurch ein pfeilförmiger oder zickzackförmiger Verlauf der Unterbrechungen der Klebstoffspur auf dem Filtermedium gebildet wird. Alternativ können die Anfangs- und Endpunkte der Unterbrechungen der Klebstoffspuren durch eine Kurvenschar definiert werden, wobei die Kurven insbesondere dieselbe Form haben, jedoch in einer Richtung senkrecht (+/- 30°) zu den Faltkanten zueinander verschoben sind. Hierfür können beispielsweise Kreis- oder Ellipsenabschnitte, Sinusformen oder sonstige regelmäßige Schwingungsformen verwendet werden.

In einer Ausführungsform weist der Filter entweder reinseitig und/oder rohseitig eine durch die Faltkanten gebildete Fläche auf, welche zumindest in einem Teilbereich nicht parallel zu der durch die gegenüberliegenden Faltenspitzen gebildeten Ebene liegt. Das Filterelement kann auf diese Weise zur Optimierung der Filterwirkung durch bessere Raumausnutzung im Bereich dieser Seite des Filtereinsatzes auf einfache Weise an komplexe Strukturen im Ansaugbereich eines Verbrennungsmotors angepasst werden. Durch die gute Anlage des Filterelementes an die Geometrie im Ansaugweg dient die Erfindung auch der Verbesserung des Strömungsverhaltens an dieser Lufteintrittsseite des Filterelements.

In einer vorteilhaften Ausführungsform verläuft mindestens ein Teil der durch die rohseitigen Faltenspitzen gebildete Fläche in einem Winkel von insbesondere 0-80°, bevorzugt 10°-45°, besonders bevorzugt 10°-25° zu der durch die reinseitigen Faltenspitzen gebildete Fläche.

In einer besonders vorteilhaften Ausführungsform verläuft die durch die rohseitigen Faltenspitzen gebildete Fläche in einem Bereich des Filterelements parallel zu der durch die reinseitigen Faltenspitzen gebildeten Fläche und in mindestens einem zweiten Randbereich des Filterelements in einem Winkel von 0-80°, bevorzugt 10°-45°, besonders bevorzugt 10°-25° zu der durch die reinseitigen Faltenspitzen gebildete Fläche, wobei zum Rand des Filterelements die Faltenhöhe kontinuierlich abnimmt. Hierdurch können vorteilhaft die Anströmbedingungen im Luftfiltergehäuse an die Bauraumbedingungen angepasst werden. Beispielsweise kann in weniger von der Strömung beaufschlagten Bereichen, in welchen die Partikelbelastung des Filterelements geringer ist, eine geringere Faltenhöhe vorgesehen werden. Ferner kann durch diese Weise der Druckverlust am Filterelement gesenkt werden.

In einer Ausführungsform umfasst das Filtermedium eine Lage eines Trägers, und eine anströmseitige Filterlage, wobei die anströmseitige Filterlage eine Filterschicht aus Feinfasern aufweist.

Diese Anordnung hat den Vorteil, dass anströmseitig die Abscheidung der Partikel oberflächennah innerhalb der Feinfaserschicht oder bei entsprechend dünnen Fasern, hier in der Regel Nanofasern, vollständig auf der Oberfläche der Feinfaserschicht stattfindet. Dadurch wird verhindert, dass kleine Partikel, insbesondere Rußpartikel in Bereichen mit hohen Strömungsgeschwindigkeiten in das Filtermedium eindringen und dieses im Inneren Verstopfen.

Dies ist insbesondere bei großen Faltenhöhen von Vorteil, da dort die unterschiedlichen Abschnitte des Filtermediums je nach Position im Filterelement unterschiedlich stark belastet sein können. Aufgrund der inhomogenen Geschwindigkeitsverteilung könnte es deshalb bei Elementen mit hohen Falten zu einem lokalen Verblocken der Filterfläche kommen. Da die verblockten Bereiche aufgrund des höheren Druckverlusts mit der Zeit weniger Durchströmt werden, kann sich die Geschwindigkeitsüberhöhung verlagern, worauf weitere Bereiche beginnen zu verblocken, so dass die Gesamtlebensdauer des Elements (Standzeit) reduziert würde.

In einer Ausführungsform wird eine volumetrische Feinstfaserlage verwendet und mit dieser eine Tiefenfilterschicht aus feinsten Fasern gebildet, die die abgeschiedenen Partikel über die gesamte Dicke der Feinstfaserlage verteilt speichert und somit den Aufbau eines dichten Filterkuchens verhindert. Hierzu wird bevorzugt eine Feinstfaserschicht aus Meltblownfasern verwendet.

In einer Ausführungsform umfasst der Filter ein Filtermedium, bei dem in Durchströmrichtung mindestens eine Lage eines Filtermediums auf einem Träger angeordnet ist, wobei die anströmseitige Filterlage eine Filterschicht aus Feinfasem aufweist, wobei die Feinfasem im Innern des Filtermediums angeordnet sind.

In einer Ausführungsform sind die Feinfasem Mikro- oder Nanofasern.

In einer Ausführungsform ist mindestens eine Lage eines Filtermediums auf einem Träger angeordnet, wobei die anströmseitige Filterlage eine Filterschicht aus Feinfasern aufweist und der Träger ein Gitter aus Polymid 6.6 ist.

In einer Ausführungsform beträgt die Maschenweite des Gitters zwischen 100 und 150 µm.

In einer Ausführungsform weist die Filterschicht Fasern mit einem mittleren Faserdurchmesser von ∼ 2 µm auf.

In einer Ausführungsform ist in Durchströmrichtung mindestens eine Lage eines Filtermediums auf einem Träger, insbesondere einem Zelluloseträger oder einem Zellulosefiltermedium angeordnet ist, wobei die anströmseitige Filterlage eine Filterschicht aus Feinfasern aufweist.

In einer Ausführungsform ist die anströmseitige Filterlage eine voluminöse Feinstfilterschicht aus

Meltblownfasern mit einer Dicke im Bereich von 0,01 -0,3 mm, wobei der mittlere Faserdurchmesser der Meltblownfasern insbesondere ungefähr 2 µm beträgt. Dabei beträgt insbesondere der untere Faserdurchmesser d50-2σ ungefähr 700 nm. In einer vorteilhaften Weiterbildung liegt das Gewicht der Feinstfaserschicht im Bereich von 5 - 20 g/m2.

In einer Ausführungsform umfasst die Feinstfilterschicht Nanofasern mit Durchmessern von 0,01 bis 0,5 Mikrometern Die Feinstfaserlage aus Nanofasern weist inbesondere eine Dicke kleiner 1 µm auf. Dadurch werden die abgeschiedenen Partikel an der Oberfläche abgeschieden und in Form eines Filterkuchens aufgebaut. Die Fasern können beispielsweise mittels Elektrospray hergestellt werden.

In einer Ausführungsform beträgt die Dicke der Feinstfaserschicht 0,08 -0,13 mm.

In einer Ausführungsform beträgt das Gewicht der Feinstfaserschicht 10 g/m².

In einer Ausführungsform liegt die Luftdurchlässigkeit der Feinstfaserschicht im Bereich von 500 -5000 l/m2s.

In einer Ausführungsform liegt die Luftdurchlässigkeit der Feinstfaserschicht im Bereich von 1.000 -1.500 l/m2s.

In einer Ausführungsform ist der Werkstoff der Feinstfaserschicht ausgewählt aus der Gruppe bestehend aus Polybutylenterephthalat, Polycarbonat, Polypropylen, Polyamid, Polyethylenterephthalat, Polyvinylalkohol, Polyvinylnitrat, Polyvinylacetat, Polyvinylhalid, Polyester, Polyalcylenterephtalat, Polyalkylennaphtalat oder Polyurethan..

In einer Ausführungsform besteht der Träger aus einem Zellulose-basierten Filtermedium.

In einer Ausführungsform liegt das Flächengewicht des Trägers zwischen 50 und 200 g/m2.

In einer Ausführungsform weist der Träger eine Luftdurchlässigkeit zwischen 50 und 100 l/m2s auf.

In einer Ausführungsform liegt die Dicke des Trägermaterials im Bereich von 0,2 -0,5 mm.

In einer Ausführungsform ist der Träger flammhemmend imprägniert.

In einer Ausführungsform erfolgt die Verbindung zwischen Träger und Feinstfaserschicht mittels Kalander.

In einer Ausführungsform ist die Feinstfaserschicht auf dem Träger aufgeklebt.

In einer Ausführungsform weist das Filterelement mindestens zwei Abschnitte auf, in welchen die durch die reinseitigen oder rohseitigen Faltenspitzen gebildeten Flächen parallel aber in unterschiedlichem Abstand zur jeweils gegenüberliegenden Fläche verlaufen. Der Unterschied in der Faltenhöhe der mindestens zwei Abschnitte resultiert in einem gestuften Element, welches eine bessere Raumausnutzung in komplex geformten Bauräumen erlaubt.

In einer weiteren Ausführungsform können auch Schrägen, eckige oder gewölbte Konturen an der entsprechenden Seite des Filtereinsatzes vorgesehen werden, wobei durch die durchgängige Zickzackfaltung eine weitgehend gleichmäßige Filterwirkung über die gesamte Filterfläche sichergestellt ist. An der anderen Seite des Filterelementes ist dabei eine gleichmäßig ebene Fläche ohne Verbindungsstege vorhanden, da die Bereiche unterschiedlicher Faltenhöhe hier kontinuierlich ineinander übergehen.

In einer Ausführungsform weisen die Faltenspitzen eine Form auf, welche einem Keil oder alternativ einem Keilstumpf entspricht. Dies bedeutet, dass die Faltenspitze im Falle der Keilstumpfform in der Mitte entlang der Faltkante ein Plateau aufweist, welches im Wesentlichen parallel zu der durch die Faltenspitzen gebildeten Ebene verläuft. Beidseitig des Plateaus schließen sich schmale Übergangsbereiche der Faltenspitzen an, welche zu dem Plateau in einem Winkel von 45 (+35/- 30)°, bevorzugt 45°-80° stehen. Die Breite des Plateaubereichs beträgt höchstens ein Viertel, vorzugsweise höchstens ein Fünftel und besonders bevorzugt höchsten ein Sechstel des Faltenabstandes. Im Falle der Keilform schließen die Übergangsbereiche einen Winkel von 90+/- 30°, bevorzugt 60°-90° ein und gehen an einer scharfen Faltkante direkt ineinander über. Die Breite der Übergangsbereiche beträgt im Falle der Keilform höchstens 35%, bevorzugt höchstens 25% des Faltenabstandes, im Falle des Keilstumpfes höchstens ein Viertel, vorzugsweise höchstens ein Fünftel und besonders bevorzugt höchstens ein Sechstel des Faltenabstandes.

In einer Ausführungsform weisen die Faltenspitzen eine mehrstufige Form auf, wobei in einem ersten Bereich ausgehend von der Faltkante die beiden Filtermediumabschnitte im Wesentlichen direkt aneinander liegen oder einen Winkel kleiner 10°, bevorzugt kleiner 5° einschließen. Der erste Bereich erstreckt sich dabei über eine Länge von kleiner 10 mm bevorzugt 5mm +/- 0,2 mm. In einem daran anschließenden Übergangsbereich mit einer Länge von kleiner 10 mm bevorzugt 5mm +/- 0,2 mm schließen die gegenüberliegenden Filtermediumabschnitte einen Winkel von 10°-40°, bevorzugt von 18°-30°, besonders bevorzugt von 20-25° ein. Über den restlichen Verlauf der Falte verlaufen die gegenüberliegenden Filtermediumabschnitte im Wesentlichen parallel und schließen bevorzugt einen Winkel von 0° bis 0.2° oder alternativ 0° bis -0,2° ein.

In einer Ausführungsform ist die roh- und/oder reinseitig gebildete offene Querschnittsfläche zwischen zwei Falten, in welche das zu reinigende Medium einströmt bzw. aus welchem das gereinigte Medium ausströmt kleiner als die Grundfläche des zugeordneten Faltengrundes. D. h. der Abstand, welchen zwei Filtermediumabschnitte aufweisen, welche eine Falte des Filterbalges bilden, ist einem Endbereich auf der offenen Seite dieser Falte kleiner als in dem Bereich, in welchem die Filtermediumabschnitte zusammenlaufen und verbunden sind.

In einer bevorzugten Ausführungsform ist das Verhältnis des rohseitigen offenen Querschnittes zwischen zwei rohseitigen Faltenspitzen zur im gleichen Zwischenraum unten liegenden, durch den Faltengrund gebildeten Grundfläche kleiner 1, bevorzugt kleiner 0,85, weiter bevorzugt kleiner 0,7 und besonders bevorzugt kleiner 0,4.

In einer Ausführungsform werden die Stirnseiten mittels durchgehender Klebstoffspuren abgedichtet. Hierbei ist mindestens auf der Reinseite jede Falte durch Schmelzklebstoff verschlossen, welcher im ungefalteten Zustand in einer durchgehenden Spur am Rand des Filtermediums aufgetragen wird und beim Aufstellen der Falten diese zur Stirnseite hin verschließt. In einer weiteren Ausgestaltung wird ebenfalls im Randbereich zur Stabilisierung des Filterelements auch eine kontinuierliche oder unterbrochene Klebstoffspur auf der Rohseite des Filterelements aufgetragen.

In einer Ausführungsform erfolgt die Abdichtung der Stirnseiten durch ein Textil oder Gewebe, z. B. Vlies, insbesondere Polyestervlies, welches eine Beschichtung aus Schmelzklebstoff aufweist. Zur Abdichtung der Stirnseiten wird das Gewebe auf der beschichteten Seite mit dem Filterbalg in Kontakt gebracht. Hierbei kann die Beschichtung aus Schmelzklebstoff vor dem Aufbringen auf die Stirnseite mittels Infrarotstrahlung erwärmt und anschließend in plastischem Zustand auf den Filterbalg aufgebracht werden. Der Schmelzklebstoff dringt in die Falten des Filtermediums ein und verfestigt sich beim Abkühlen. Alternativ oder zusätzlich kann die Beschichtung von außen durch Infrarotstrahlung oder durch Kontakt mit einem heißen Gegenstück erwärmt werden, wenn die Beschichtung aus Schmelzklebstoff mit der Stirnseite des Filterbalges in Kontakt steht. In einer weiteren Ausführungsform weist das Filterelement eine flächige Abdichtung der Stirnseiten mit Kunststoff auf.

In einer Ausgestaltung ist die flächige Abdichtung durch ein im Wesentlichen plattenförmiges Kunststoffteil gebildet, welches mit der Stirnseite des Filterbalgs mit einem Schmelzklebstoff flächig verklebt wird.

In einer Ausgestaltung ist die flächige Abdichtung durch ein Gusspolyamid, beispielsweise Polyamid 6 mit Ausgangsstoff ε-Caprolactam gebildet. Dieses wird in einer Gießschale in flüssigem Zustand vorgehalten, anschließend wird die Stirnseite des Filterelements in den noch flüssigen Kunststoff getaucht. Der Kunststoff härtet in der Form der Gießschale an der Stirnseite des Filterelements aus und verschließt damit die Stirnseite. Alternativ kann in die Gießschale ein Polyurethan eingebracht werden, welches beim Aushärten aufschäumt und dabei zwischen die Falten an der Stirnseite eindringt. Auf diese Weise kann eine leichte und flexible Abdichtung erzielt werden.

In einer anderen Ausgestaltung erfolgt die flächige Abdichtung der Stirnseiten mit einem thermisch erweichbaren Kunststoff, z. B. Polypropylen, Polyamid, Polyoxymethylen. Hierbei wird ein im Wesentlichen plattenförmiges Kunststoffteil auf der an die Stirnseite anzubindenden Seite durch Infrarotstrahlung bis in den Bereich des Schmelzpunkts erwärmt und anschließend gegen die Stirnseite des Filterbalges gepresst. Hierbei dringt das Filtermedium mit seinen Stirnkanten in den erweichten Kunststoff und verbindet sich mit diesem beim Verfestigen des Kunststoffs.

In einer anderen Ausgestaltung erfolgt die flächige Abdichtung der Stirnseiten mit einem thermisch erweichbaren, unter Wärmezufuhr aufquellenden Material, insbesondere Nitrilkautschuk. Hierbei wird eine Folie aus diesem Material gegen die Stirnseiten des Filterbalges gepresst und gleichzeitig erwärmt. Hierbei wird das Material erweicht, quillt auf umschließt dabei die Stirnkanten des Filtermediums. Anschließend härtet das Material aus, wodurch eine feste und formschlüssige Verbindung des Materials mit dem Filtermedium entsteht. In einer vorteilhaften Weiterbildung wird während des Verbindungsvorganges in die dem Filtermedium abgewandte, außen liegende Oberfläche des thermisch erweichbaren Materials eine Vliesschicht eingebracht. Diese verbindet sich in gleicher Weise wie das Filtermedium mit dem thermisch erweichbaren Material. Dies hat den Vorteil, dass eine gleichmäßige Oberfläche und ferner eine zusätzliche Stabilisierung der flächigen Abdichtung erreicht werden.

In einer Ausführungsform weist das Filterelement einen umlaufenden, die nicht durchströmten Oberflächen des Filterelements zumindest teilweise abdeckenden Rahmen aus Kunststoff auf. Hierbei können die stirnseitigen Rahmenteile durch die flächige Abdichtung aus Kunststoff gebildet sein oder zusätzliche Rahmenteile vorgesehen sein, welche die Stirnseiten umschließen.

In einer vorteilhaften Ausgestaltung weist der Rahmen eine umlaufende Dichtung auf, welche zur Trennung von Rohseite und Reinseite dient. Diese kann axial wirken und auf der Rohseite des Filterelements am Rahmen angebracht sein. Dabei kann die Dichtung axial senkrecht zu der rohseitigen Anströmfläche, welche durch die rohseitigen Faltenspitzen gebildet wird ausgerichtet und mit einer Dichtfläche des Gehäuses oberhalb der Anströmfläche in Kontakt bringbar sein. Alternativ kann die Dichtung unterhalb der Anströmfläche um das Filterelement umlaufend vorgesehen sein, wobei die Abdichtung um das Filterelement umlaufend in einer Ebene zwischen Anströmseite und Abströmseite erfolgt.

Weiterhin kann auch eine radial nach außen wirkende Dichtung vorgesehen sein, welche an einem umlaufenden Rahmenteil angebracht ist, welches über die rohseitige Anströmfläche, welche durch die rohseitigen Faltenspitzen gebildet wird hinaussteht.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Figuren näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen:
- Fig. 1: eine Ansicht einer erfindungsgemäßen Ausführungsform eines Filters;
- Fig. 2: eine Ansicht einer weiteren Ausführungsform eines erfindungsgemäßen Filters;
- Fig. 3: die Detailansicht einer Anordnung der Klebstoffspuren auf einem erfindungsgemäßen Filters;
- Fig. 4: die Detailansicht einer alternativen Anordnung der Klebstoffspuren auf einem erfindungsgemäßen Filter;
- Fig. 5: eine Ausführungsform der äußeren Form eines erfindungsgemäßen Filters;
- Fig. 6: eine weitere Ausführungsform der äußeren Form eines erfindungsgemäßen Filters;
- Fig. 7: eine Ausführungsform einer Faltenspitze eines erfindungsgemäßen Filters;
- Fign. 8 bis 12: schematische Detailansichten von unterschiedlichen Anordnungen von Klebstoffspuren auf einem Filtermedium ähnlich der Anordnung aus Figur 4;
- Figuren 13 bis 15: schematisch isometrische Darstellungen einer Falte des Filterelements des Filters ähnlich dem Filter aus Figuren 1 bis 7, wobei hier die Klebstoffspuren in unterschiedlichen Abständen zueinander angeordnet sind;
- Fig. 16: schematisch im Schnitt ein nicht gefaltetes Filtermedium eines Filters ähnlich dem Filter aus Figuren 1 bis 15, bei dem rohseitig und reinseitig Klebstoffspuren angeordnet sind, wobei die Ausdehnung der Klebstoffspuren senkrecht zum Filtermedium mit ihrem Abstand zu den benachbarten Faltkanten wechselweise zunimmt und abnimmt;
- Fig. 17: schematisch im Schnitt ein Ausschnitt eines Filterelements mit einem gefalteten Filtermedium eines Filters ähnlich den Filtern aus Figuren 1 bis 16, bei dem die jeweils freien Seiten der Klebstoffabschnitte eine Filtermediumabschnitts an entsprechenden freien Seite der Klebstoffabschnitte des im Faltenzwischenraum gegenüberliegenden Filtermediumabschnitts flächig anliegen;
- Fig. 18: schematisch im Schnitt ein alternatives Filterelement eines Filters ähnlich den Filtern aus Figuren 1 bis 17, bei dem die rohseitigen Faltenspitzen gequetscht und die rohseitigen Faltengründe aufgeweitet sind;
- Fig. 19: eine isometrische Detailansicht eines weiteren Ausführungsbeispiels eines Filterelements, bei dem auf der Rohseite Senken, welche senkrecht von den Faltgründen zu den Faltspitzen erstrecken, in das Filtermedium eingeformt sind;
- Fig. 20: eine isometrische Detailansicht eines weiteren Ausführungsbeispiels eines Filterelements ähnlich dem Filterelement aus Figur 19, bei dem die rohseitigen Faltengründe im Vergleich zu den rohseitigen Faltenspitzen aufgeweitet sind;
- Fig. 21: einen Schnitt eines weiteren Ausführungsbeispiels eines Filterelements ähnlich zu den Filterelementen aus Figuren 19 und 20, bei dem die Tiefen der Senken über die Faltenhöhe annähernd konstant ist;
- Fig. 22: einen Schnitt eines Filterelements ähnlich zu dem Filterelement aus Figur 21, bei dem die Tiefen der Senken von den rohseitigen Faltenspitzen zu den rohseitigen Faltengründen keilförmig abnimmt;
- Fig. 23: einen Schnitt eines Filterelements, welches ähnlich ist zu den Filterelementen aus Figuren 19 bis 22, entlang einer Schnittebene parallel zu einer Ebene durch die rohseitigen Faltenspitzen, bei dem zwischen benachbarten Senken jeweils eine Klebstoffspur angeordnet ist;
- Fig. 24: einen Schnitt eines Filterelements, welches ähnlich ist zu den Filterelementen aus Figuren 19 bis 22, entlang einer Schnittebene parallel zu einer Ebene durch die rohseitigen Faltenspitzen, bei dem gegenüberliegende Stützrücken, welche jeweils an die in den reinseitigen Faltenzwischenräumen gegenüberliegenden Mediumabschnitte angeformt sind, sich aneinander abstützen;
- Fig. 25: eine isometrische Darstellung eines nicht gefalteten Filtermediums zur Verwendung bei einem der Filterelemente ähnlich der Filterelemente aus Figuren 19 bis 24, bei dem die Senken mittels senkrecht zu den Faltkanten verlaufenden Rillierungen realisiert sind;
- Fig. 26: ein unbeschichtetes PA 6.6-Gitter mit einer Maschenweite von 1,00 ± 10 µm;
- Fig. 27: das Gitter aus Fig. 26 mit einer Beschichtung aus Nanofasern;
- Fig. 28: das beschichtete Gitter aus Fig. 27 im Querschnitt;
- Fig. 29: ein unbeschichtetes PA 6.6-Gitter mit einer Maschenweite von 102 ± 6 µm;
- Fig. 30: das Gitter aus Fig. 29 mit einer Beschichtung aus Nanofasern;
- Fig. 31: das beschichtete Gitter aus Fig. 30 im Querschnitt;
- Fig. 32: ein unbeschichtetes PA 6.6-Gitter mit einer Maschenweite von 150 ± 9 µm;
- Fig. 33: das Gitter aus FIG. 32 mit einer Beschichtung aus Nanofasern; und
- Fig. 34: das beschichtete Gitter aus FIG. 33 im Querschnitt.

### Ausführungsform(en) der Erfindung

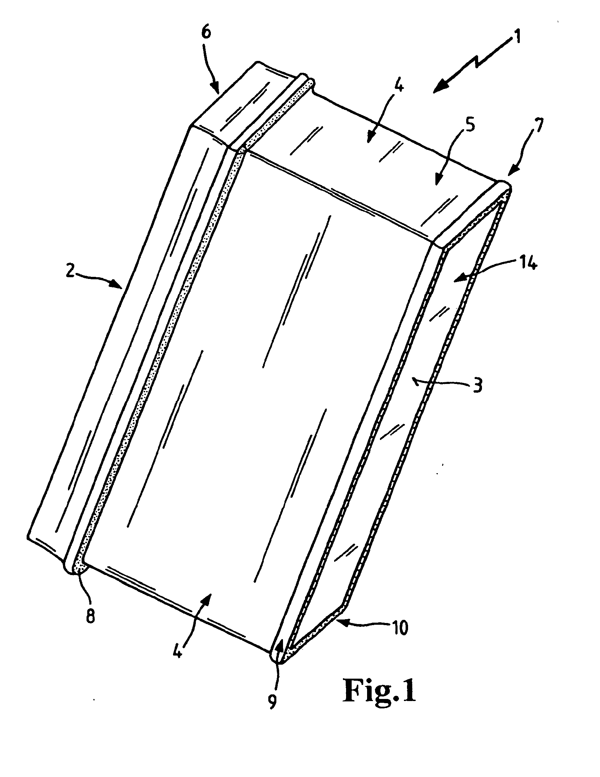

Figur 1 zeigt ein Filterelement 1 mit einer rohseitigen Anströmseite 2 und einer reinseitigen Abströmseite 3. Das Filterelement wird durch ein mehrfach gefaltetes Filtermedium 14 gebildet, wobei sich die Falten zwischen der Anströmseite und der Abströmseite erstrecken, d. h. es befinden sich jeweils Faltenspitzen auf der Anströmseite und der Abströmseite. Die nicht durchströmten Seitenflächen des Filterelements 4 sind von einem Polyestervlies umgeben, welches auf seiner dem Filterelement zugewandten Seite mit einer Schmelzklebstoffschicht versehen ist. Diese Schmelzklebstoffschicht stellt eine flächige Verklebung des Polyestervlieses mit dem Filterelement her, wobei auch die Stirnseite 5 des Filterbalges abgedichtet wird. Das Filterelement 1 umfasst einen Hauptrahmen 6 und einen Hilfsrahmen 7, wobei der Hauptrahmen eine axiale Dichtung 8 trägt, welche in Richtung der Abströmseite 3 dichtet und in eine Nut des Hauptrahmens oder in eine Nut zwischen Hauptrahmen und Seitenflächen 4 eingebracht ist. Der Hilfsrahmen ist mit den Seitenflächen 4 durch eine Klebeverbindung verbunden und weist radiale Flächen 9 und axiale Flächen 10 zur Abstützung des Filterelements in einem nicht dargestellten Gehäuse auf.

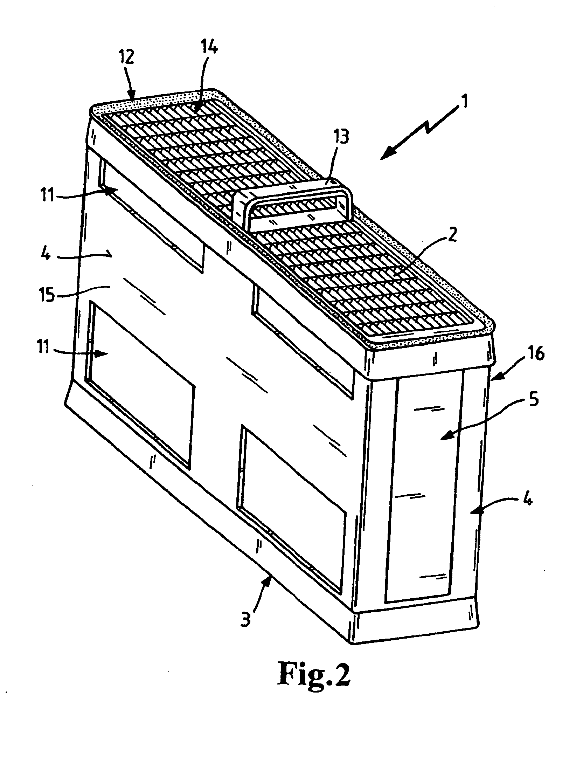

Figur 2 zeigt eine Ausführungsform eines Filterelements 1 mit einer rohseitigen Anströmseite 2 und einer reinseitigen Abströmseite 3. Auf den nicht durchströmten Seitenflächen 4 des Filtermediums 14 ist ein Kunststoffrahmen 16 mittels einer Schmelzklebstoffverbindung aufgebracht, wobei auf den Stirnseiten 5 durch den Schmelzklebstoff auch die Abdichtung der Stirnseite erfolgt. Auf den Endseiten 15 sind Öffnungen in den Kunststoffrahmen 16 eingebracht. Kunststoffrahmen 16 trägt auf der Anströmseite 2 eine axiale Dichtung 12, welche mit einer Dichtfläche eines nicht gezeigten Gehäuses in Eingriff bringbar ist. Ferner ist ein Griff 13 vorgesehen, welcher mit dem Kunststoffrahmen 16 in Verbindung steht und zur besseren Handhabung des Filterelements 1 dient.

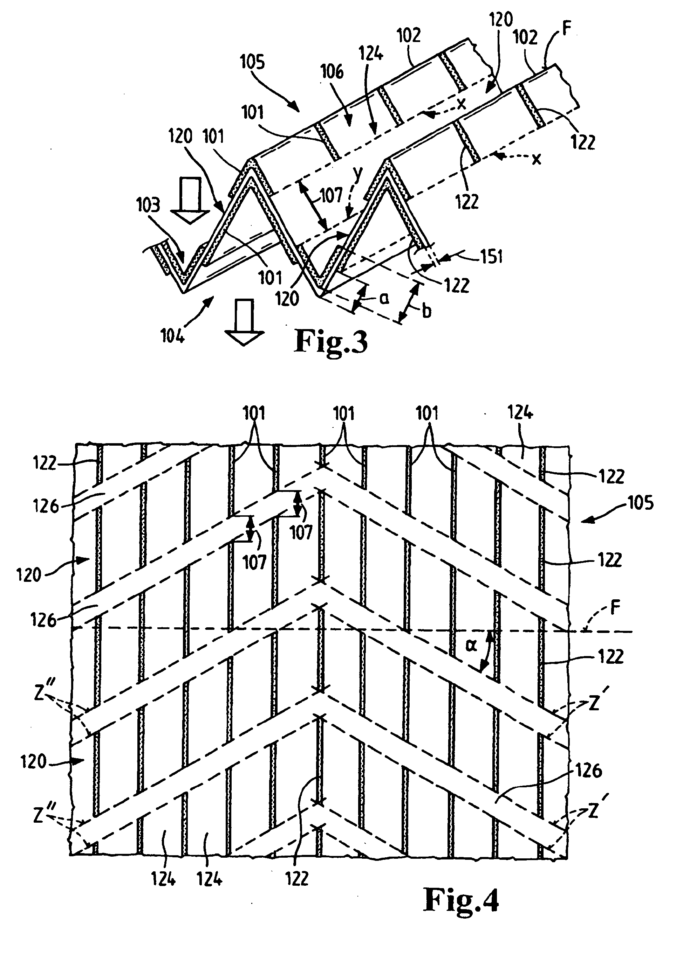

Figur 3 zeigt die Detailansicht einer Anordnung der Klebstoffspuren auf einem erfindungsgemäßen Filterelement. In dieser Ausführungsform sind in die Falten Klebstoffspuren 101 aus Schmelzklebstoff eingebracht, welche sich zwischen Faltenspitzen 102 und Faltengrund 103 erstrecken. Dabei sind sowohl auf der Reinseite 104 als auch auf der Rohseite 105 Klebstoffspuren 101 eingebracht. Es werde dabei vor dem Aufstellen der einzelnen Falten mindestens zwei Klebstoffspuren 101 zueinander parallel und senkrecht zu der Richtung der Faltkanten 102, 103 auf das Filtermedium 106 aufgebracht. Die Klebstoffspuren 101 sind nicht durchgehend, sondern in regelmäßigen Abständen durch eine Unterbrechung 107 unterbrochen. Auf der Rohseite 105 ist die Klebstoffspur einmal zwischen Faltenspitze und Faltengrund unterbrochen. Die Unterbrechung 107 befindet sich dabei mittig zwischen Faltenspitze und Faltengrund und entspricht in ihrer Länge zwischen einem Drittel und der Hälfte der Faltenhöhe. Die Unterbrechung 107 beginnt in einem Abstand b vom rohseitigen Faltengrund 103. Damit werden die Falten rohseitig nur im Bereich des Faltengrundes und der Faltenspitzen verklebt. Reinseitig ist eine Unterbrechung der Klebstoffspur über eine Länge a vorgesehen, welche die Rohseitige Faltenspitze umgibt. Somit sind die Falten rohseitig im Bereich der Faltenspitzen nicht verklebt.

Die Abstände a und b von rohseitigem Faltengrund und reinseitiger Faltenspitze sind so ausgebildet, dass sich die Unterbrechung 107 der reinseitigen und der rohseitigen Klebstoffspur nicht überschneiden. Damit ist sichergestellt, dass sowohl im Bereich der reinseitigen Faltenspitzen als auch in der Nähe des reinseitigen Faltengrundes eine Überlappung der reinseitigen 104 und rohseitigen 105 Klebstoffspur 101 gebildet ist. Die durch die Anfangs- und Endpunkte der einzelnen Klebstoffspurenabschnitte gebildeten Geraden x und y verlaufen parallel zu den Faltkanten.

Figur 4 zeigt eine alternative Anordnung der Klebstoffspuren auf einem erfindungsgemäßen Filterelement. In dieser Ausführungsform sind die Anfangs- und Endpunkte der Unterbrechungen der Klebstoffspuren 101 an einer Mehrzahl von Geraden z ausgerichtet, welche zueinander parallel verlaufen und mit den Faltkanten F einen Winkel α von 10-80°, bevorzugt 45 +/-15° bilden. Dabei verlaufen die Anfangs- und Endpunkte der Unterbrechungen der Klebstoffspuren an mindestens zwei Geradenscharen z' und z", wobei jede Geradenschar zueinander parallele Geraden umfasst, wobei sich die korrespondierenden Geraden auf dem Filtermedium schneiden, wodurch ein pfeilförmiger oder zickzackförmiger Verlauf der Unterbrechungen 107 der Klebstoffspur 101 auf dem Filtermedium gebildet wird.

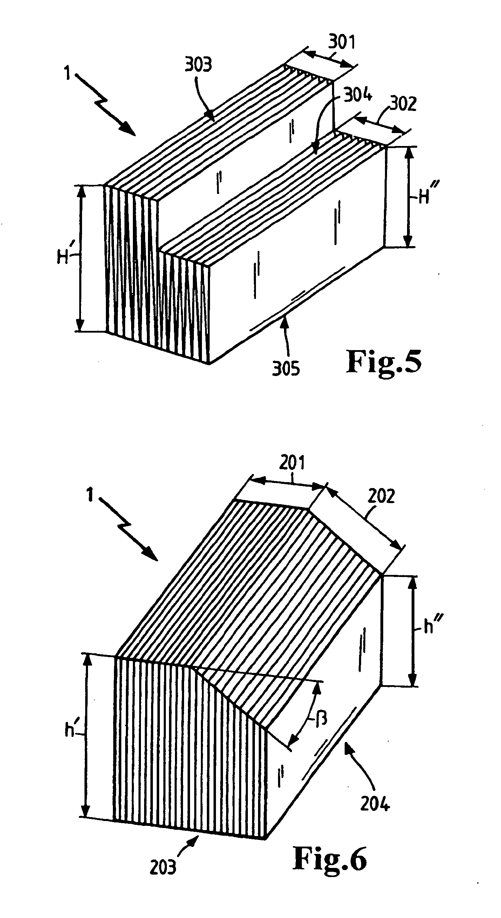

Figur 5 zeigt eine Ausführungsform der äußeren Form eines erfindungsgemäßen Filterelements 1. In dieser Ausführungsform weist das Filterelement mindestens zwei Abschnitte (301, 302) auf, in welchen die durch die rohseitigen Faltenspitzen gebildeten Flächen 303 und 304 parallel, aber in unterschiedlichem Abstand H (H', H") zur jeweils gegenüberliegenden Fläche 305 verlaufen. Der Unterschied in der Faltenhöhe der mindestens zwei Abschnitte resultiert in einem gestuften Element, welches eine bessere Raumausnutzung in komplex geformten Bauräumen erlaubt.

Figur 6 zeigt eine Ausführungsform der äußeren Form eines erfindungsgemäßen Filterelements 1. Hierbei verläuft die durch die rohseitigen Faltenspitzen gebildete Fläche in einem Bereich 101 des Filterelements parallel zu der durch die reinseitigen Faltenspitzen gebildete Fläche und in mindestens einem zweiten Randbereich 202 des Filterelements in einem Winkel β von 30° zu der durch die reinseitigen Faltenspitzen gebildete Fläche 203, wobei zum Rand 204 des Filterelements 1 die Faltenhöhe h (h', h") kontinuierlich abnimmt.

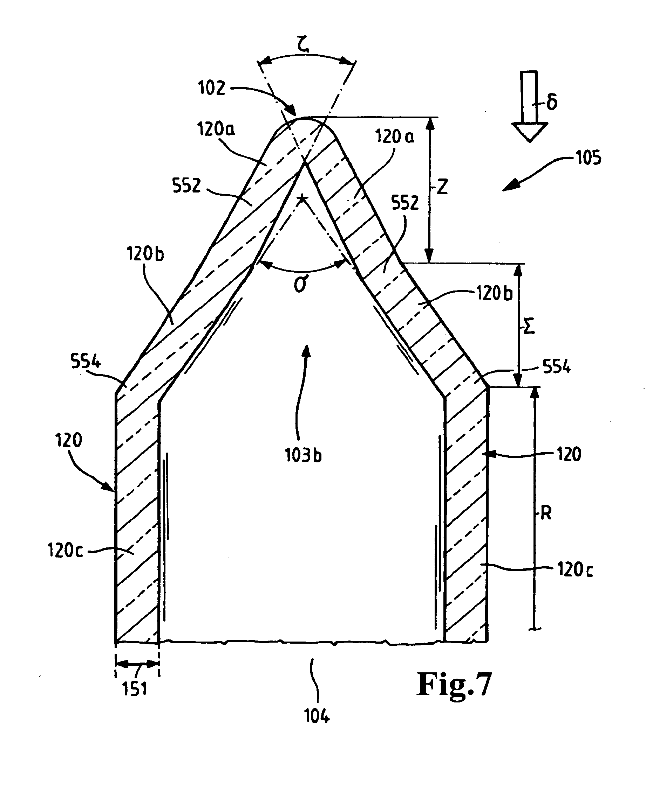

Figur 7 zeigt eine Ausführungsform einer rohseitigen Faltenspitze eines erfindungsgemäßen Filters. In dieser Ausführungsform weisen die Faltenspitzen eine mehrstufige Form auf, wobei in einem ersten Bereich Z ausgehend von der Faltkante die beiden Filtermediumabschnitte einen Winkel ζ einschließen, welcher kleiner 5° beträgt. Der erste Bereich erstreckt sich dabei über eine Länge Z von ca. 5mm. In einem daran anschließenden Übergangsbereich Σ mit einer Länge Σ von ca. 5mm schließen die gegenüberliegenden Filtermediumabschnitte einen Winkel σ von ca. 24° ein. Über den restlichen Verlauf R der Falte verlaufen die gegenüberliegenden Filtermediumabschnitte im Wesentlichen parallel und schließen einen im Vergleich zu den oben genannten Winkeln einen negativen Winkel von ca. 0,2° ein, wodurch der reinseitige Abstand der beiden Filtermediumabschnitte im weiteren Verlauf entlang der Durchströmungsrichtung δ kleiner wird. Daraus resultiert, dass der Querschnitt der auf beiden Seiten anschließenden rohseitigen Zwischenräume rechts und links dieser Falte in Richtung der Durchströmungsrichtung δ größer werden.

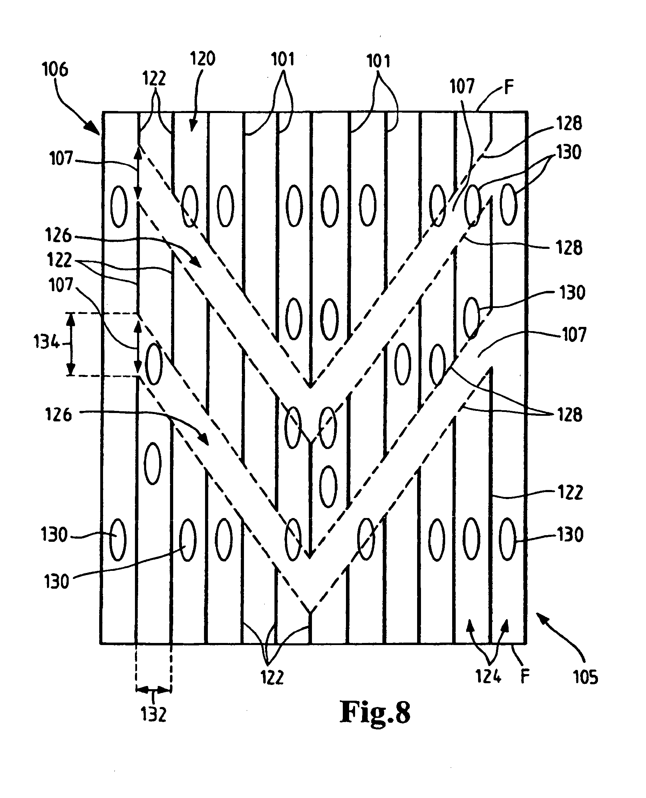

In Figur 8 ist ein Ausschnitt eines Filtermediums 106 gezeigt, welches zu den Filtermedien 106 aus der Figur 3 ähnlich ist und bei Filterelementen für Filter ähnlich den Filterelementen 1 aus Figuren 1, 2, 5 und 6 Verwendung findet. Figur 8 zeigt die Rohseite 105 eines Mediumabschnitts 120 des Filtermediums 106, der sich zwischen zwei Faltkanten F erstreckt. Die Faltkanten F sind im nicht gefalteten Filtermedium 106 als Faltlinien geprägt. Im gefalteten Filtermedium 106 umgeben die Faltenspitzen 102 die Faltkanten F.

Auf dem Filtermedium 106 erstreckt sich eine Vielzahl von länglichen Klebstoffabschnitten 122 entlang von geraden Klebstoffspuren 101. Die Klebstoffspuren 101 verlaufen äquidistant parallel zueinander und senkrecht zu den Faltkanten F. Ein Abstand 132 zwischen zwei benachbarten Klebstoffspuren 101 beträgt jeweils etwa 25 mm.

Entlang jeder der Klebstoffspuren 101 sind zwei gleich lange Klebstoffunterbrechungen 107 zwischen den Klebstoffabschnitten 122 angeordnet. Die Ausdehnung 134 der Klebstoffunterbrechungen 107 senkrecht zu den Faltkanten F beträgt jeweils etwa 15 mm. Die Klebstoffunterbrechungen 107 benachbarter Klebstoffspuren 101 sind in Richtung der Faltkanten F betrachtet versetzt zueinander angeordnet.

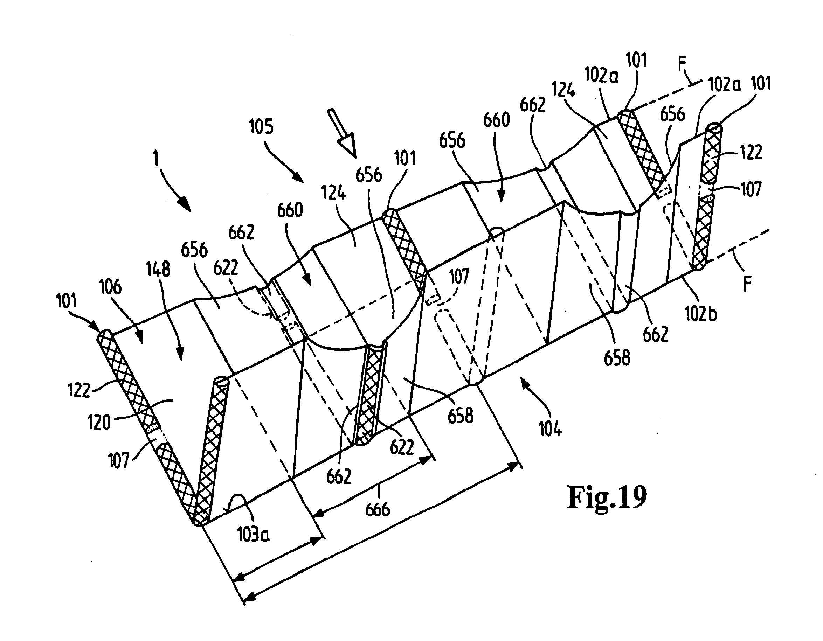

Die Klebstoffabschnitte 122 benachbarter Klebstoffspuren 101 begrenzen jeweils ein Kanalteil 124 eines Kanals, der sich im rohseitigen Faltenzwischenraum 148a des gefalteten Filtermediums 106, ähnlich wie bei einem im Zusammenhang mit Figur 19 weiter unten erläuterten Ausführungsbeispiel, zwischen den Faltkanten F erstreckt. Die Klebstoffunterbrechungen 107 verbinden die jeweils benachbarten Kanalteile 124.

Die Klebstoffunterbrechungen 107 der benachbarten Klebstoffspuren 101 realisieren zwei Durchgänge 126, die in dem in der Figur 8 gezeigten Ausführungsbeispiel V-förmig parallel und jeweils schräg zu den Faltkanten F zueinander verlaufen. Die Durchgänge 126 sind in Figur 8 durch jeweils zwei V-förmige gestrichelt angedeutete Kurven in Form von gedachten Geraden 128 definiert. Die Geraden 128 ähneln den Geradenscharen z' und z" gemäß dem Ausführungsbeispiel aus Figur 4. Die Geraden 128 verlaufen durch die sich entsprechenden Endpunkte der Klebstoffabschnitte 122. Durch die versetzte Anordnung der Klebstoffunterbrechungen 107 wird vermieden, dass die Durchgänge 126 durchgängig parallel zu den Faltkanten F verlaufen.

In Figur 8 sind beispielhaft Risikobereiche 130 des Filtermediums 106, in denen dieses beim Betrieb des Filters ohne die Verwendung der gezeigten erfindungsgemäßen Klebstoffabschnitte 122 mit den Klebstoffunterbrechungen 107 beispielsweise aufgrund von Unterdrucken kollabieren könnte, als Ellipsen angedeutet.

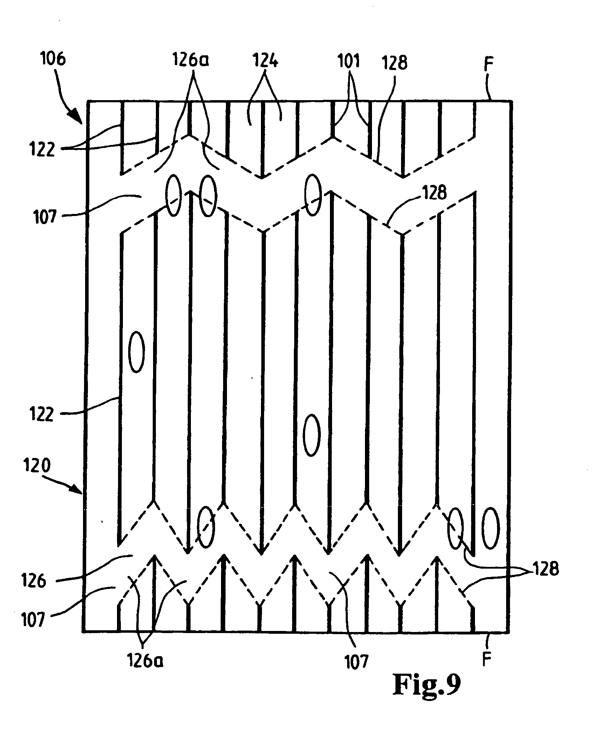

In Figur 9 ist ein weiteres Ausführungsbeispiel eines Filtermediums 106 gezeigt, welches zu dem Ausführungsbeispiel aus Figur 8 ähnlich ist. Im Unterschied zu dem Ausführungsbeispiel aus Figur 8 sind bei dem Ausführungsbeispiel aus der Figur 9 die Klebstoffunterbrechungen 107 so angeordnet, dass der in Figur 9 oben gezeigte Durchgang 126 zickzackförmig verläuft, wobei die Flanken 126a sich jeweils über drei benachbarte Klebstoffspuren 101 erstrecken.

Der in Figur 9 unten gezeigte Durchgang 126 verläuft ebenfalls zickzackförmig. Allerdings erstrecken sich hier die Flanken 126a jeweils über zwei benachbarte Klebstoffspuren 101. Die Verwendung von zwei unterschiedlich verlaufenden Durchgängen 126 verbessert die Stabilität des Filtermediums 106.

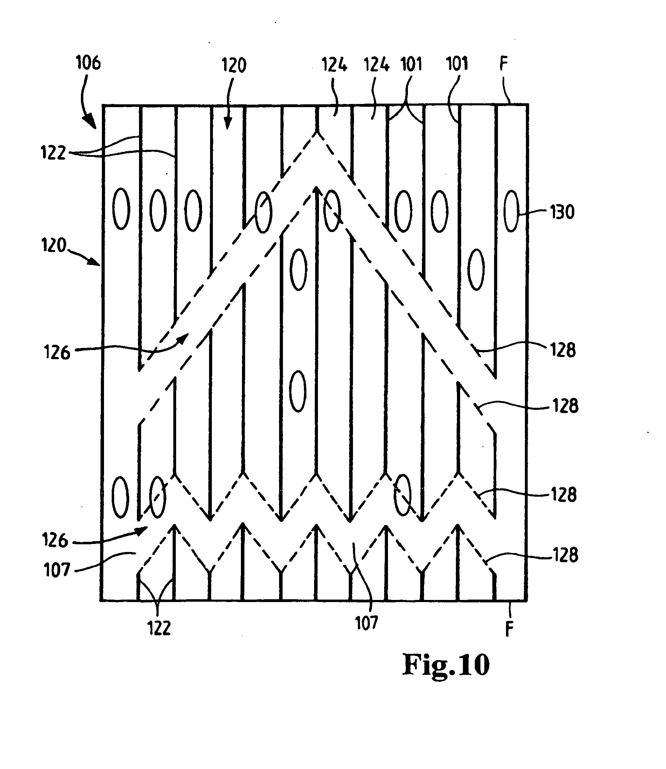

Ein weiteres Ausführungsbeispiel eines Filtermediums 106 gemäß Figur 10 ist ähnlich zu dem Filtermedium 106 aus den Ausführungsbeispielen gemäß den Figuren 8 und 9. Bei diesem Ausführungsbeispiel ist in der Figur 10 oben gezeigt ein Durchgang 126 in Form eines umgekehrten "V" ähnlich dem "V" bei dem Ausführungsbeispiel aus Figur 8 und unten ein Durchgang 126 mit zickzackförmigem Verlauf wie bei dem Ausführungsbeispiel aus Figur 9 realisiert.

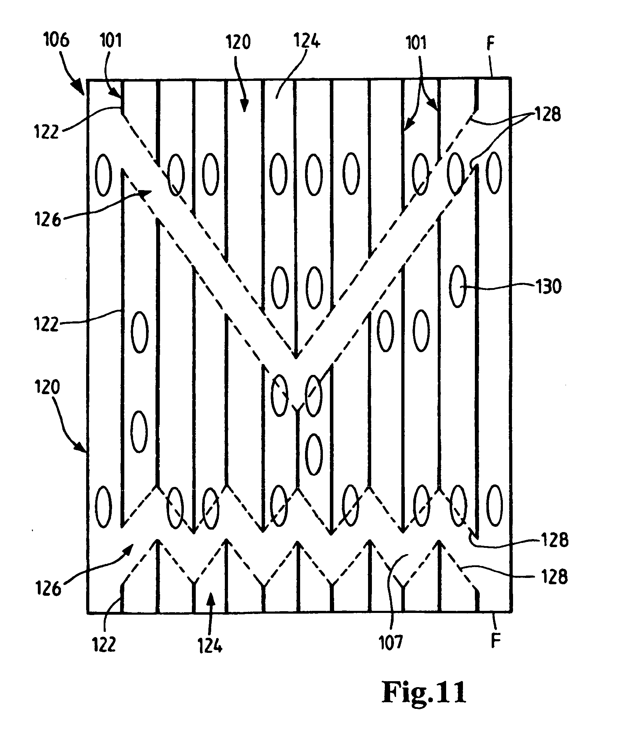

Ein weiteres Ausführungsbeispiel gemäß Figur 11 ist ähnlich zum Ausführungsbeispiel aus der Figur 10 aufgebaut, wobei hier der in der Figur oben gezeigte Durchgang 126 wie beim Ausführungsbeispiel der Figur 8 als "V" orientiert ist.

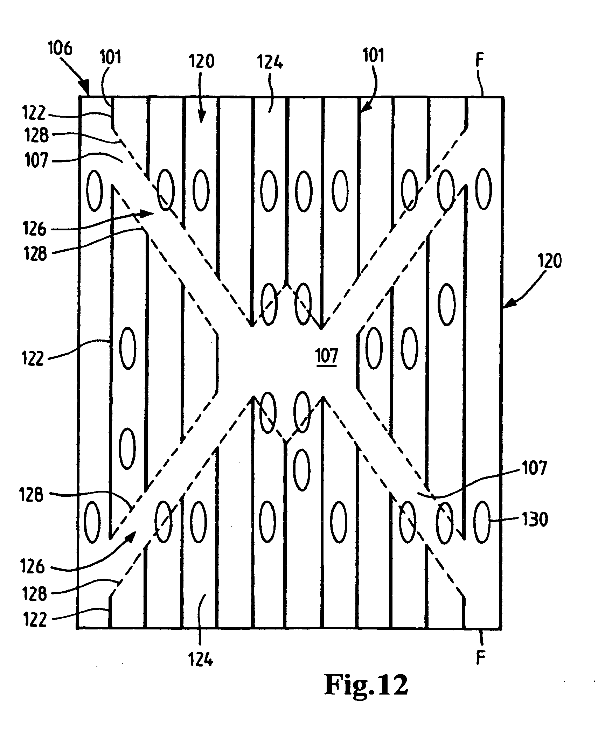

Bei einem weiteren Ausführungsbeispiel eines Filtermediums 106 gemäß Figur 12, welches zu dem Ausführungsbeispielen aus den Figuren 8 bis 11 ähnlich ist, weist ein in der Figur 12 oberer Durchgang 126 die Form eines "W" auf. Ein in der Figur 12 unten gezeigter Durchgang 126 hat die Form eines umgekehrten "W".

Die Durchgänge 126, wie sie in den Ausführungsbeispielen in Figuren 8 bis 12 gezeigt sind, können auch in anderer Weise kombiniert werden. So können auch mehr oder weniger als zwei Durchgänge 126 zwischen zwei Faltkanten F vorgesehen sein. Die Klebstoffunterbrechungen 107 können entlang der Klebstoffspuren 101 und/oder bei den unterschiedlichen Klebstoffspuren 101 identische oder unterschiedliche Ausdehnungen 134 haben. Die Ausdehnungen 134 können auch kleiner oder größer als 20 mm sein. Auch können die Abstände 132 der Klebstoffspuren 101 unterschiedlich, auch kleiner oder größer als 25 mm sein.

Auf den in Figuren 8 bis 12 nicht gezeigten Reinseiten der Mediumabschnitte 120 können ebenfalls Klebstoffabschnitte und Klebstoffunterbrechung entlang von Klebstoffspuren angeordnet sein. Diese können bevorzugt so angeordnet sein, dass die Klebstoffabschnitte 122 auf der Rohseite 105 jeweils eine der Klebstoffunterbrechungen auf der Reinseite beidseitig überragen und die der entsprechenden reinseitigen Klebstoffunterbrechung benachbarten Klebstoffabschnitte an den Enden überlappen. Umgekehrt können entsprechend die Klebstoffabschnitte auf der Reinseite die Klebstoffunterbrechungen 107 auf der Rohseite 105 überragen.

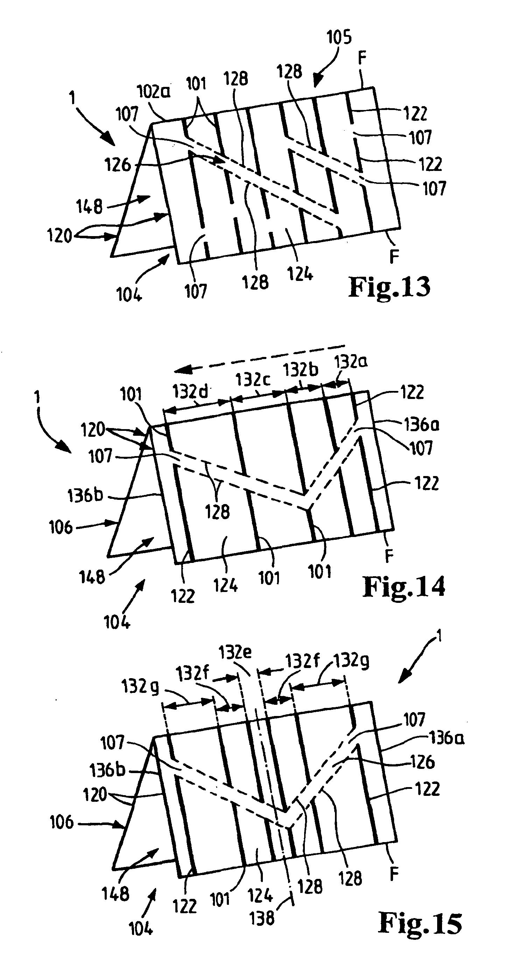

In Figur 13 ist ein Ausschnitt eines Filterelements 1 gezeigt, welches zu den Filterelementen 1 aus Figuren 1, 2, 5 und 6 ähnlich ist. In Figur 13 sind zwei Mediumabschnitte 120 gezeigt, die sich beidseitig von einer der rohseitigen Faltspitzen 102a erstrecken. Auf der Rohseite 105 des Filtermediums 106 ist, ähnlich wie bei den Ausführungsbeispielen in Figuren 3, 4 und 8 bis 12, eine Mehrzahl von Klebstoffabschnitten 122 und Klebstoffunterbrechungen 107 entlang von äquidistanten Klebstoffspuren 101 angeordnet. Die Klebstoffspuren 101 verlaufen senkrecht zu den Faltkanten F.

Bei einem in Figur 14 gezeigten, zu dem Ausführungsbeispiel aus Figur 13 ähnlichen Ausführungsbeispiel, nehmen die Abstände 132a, 132b, 132c zwischen den Klebstoffspuren 101 von einem in Figur 14 rechten Stirnrand 136a des Filterelements 1 zu einem linken Stirnrand 136b hin zu.

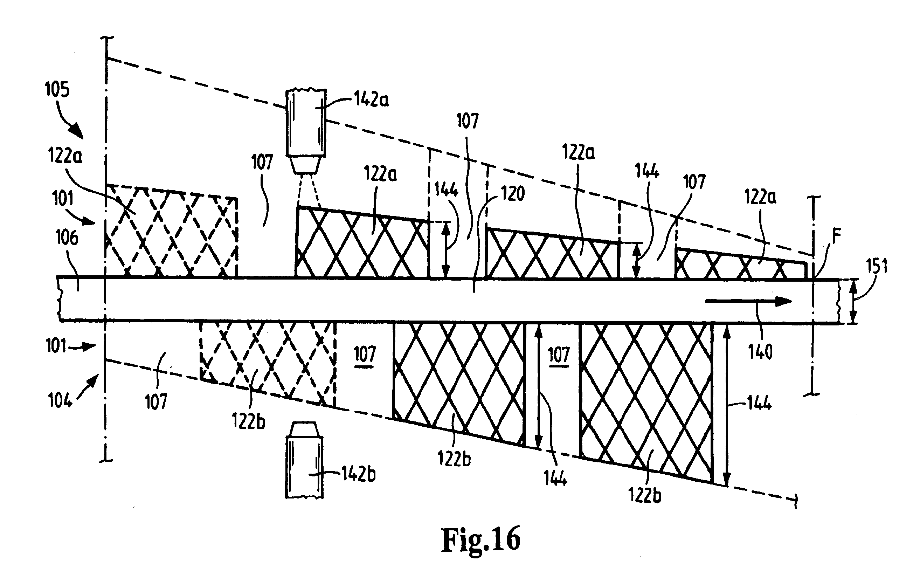

Bei einem weiteren in Figur 15 gezeigten Ausführungsbeispiel eines Filterelements 1 nehmen die Abstände 132e bis 132g von einer mittig zwischen den Stirnrändern 136a und 136b verlaufenden Mittelebene 138 spiegelsymmetrisch von innen nach außen zu. In Figur 16 ist ein Mediumabschnitt 120 des Filtermediums 106, welches zu den Filtermedien 14; 106 aus Figuren 1 bis 15 ähnlich ist, in ungefaltetem Zustand gezeigt. Das Filtermedium 106 wird horizontal in einer Transportrichtung 140 zwischen einer oberen Auftragsdüse 142a und einer unteren Auftragsdüse 142b hindurch bewegt. Die Rohseite 105 des Filtermediums ist in der Figur 16 oben, die Reinseite 104 unten. Mit den Auftragsdüsen 142a und 142b werden die Klebstoffabschnitte 122a auf der Rohseite 105 und die Klebstoffabschnitte 122b auf der Reinseite 104 des Filtermediums 106 aufgebracht. Auf der Rohseite 105 nimmt die Ausdehnung 144 der Klebstoffabschnitte 122 senkrecht zum Filtermedium 106 von der in Transportrichtung 140 vorderen Faltkante F, in Figur 16 rechts, zur hinteren Faltkante F, links, sowohl innerhalb eines Klebstoffabschnitts 122a als auch zwischen den Klebstoffabschnitten 122a, welche durch Klebstoffunterbrechungen 107 voneinander getrennt sind, hin kontinuierlich zu. Auf der Rohseite 107 nimmt die Ausdehnung 144 der dortigen Klebstoffabschnitte 122b von der vorderen Faltkante F zur hinteren Faltkante F entsprechend kontinuierlich ab. Die rohseitigen Klebstoffabschnitte 122a überlappen mit den reinseitigen Klebstoffabschnitten 122b, so dass jeweils die rohseitigen Klebstoffabschnitte 122a die reinseitigen Klebstoffunterbrechungen 107 überragen und umgekehrt die reinseitigen Klebstoffabschnitte 122b die rohseitigen Klebstoffunterbrechungen 107 überragen.

Bei einem in Figur 16 nicht gezeigten Mediumabschnitt, der dem gezeigten Mediumabschnitt 120 in Transportrichtung 140 folgt, nehmen die Ausdehnungen 144 der rohseitigen Klebstoffabschnitte 122a von der in Transportrichtung 140 hinteren Faltkante F zur nächstfolgenden Faltkante hin ab. Entsprechend nimmt auf der Reinseite 104 im nächstfolgenden Mediumabschnitt die Ausdehnung 144 der Klebstoffabschnitte 122b von der hinteren Faltkante F zur nächstfolgenden Faltkante zu. Analog ist ein ebenfalls in Figur 16 nicht gezeigter, dem gezeigten Mediumabschnitt 120 in Transportrichtung 140 vorangehender Mediumabschnitt bezüglich der vorderen Faltkante F spiegelsymmetrisch zum gezeigten Mediumabschnitt 120 aufgebaut.

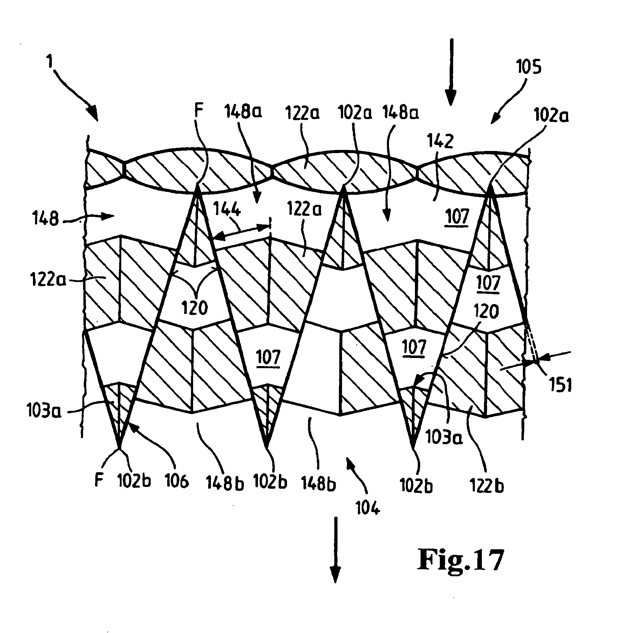

In Figur 17 ist ein Filterelement 1 im Längsschnitt gezeigt, welches aus einem zu dem Filtermedium 106 aus Figur 16 ähnlichen Filterelement 106 gefaltet ist. In den rohseitigen Faltenzwischenräumen 148a liegen die freien Seiten der rohseitigen Klebstoffabschnitte 122a eines Mediumabschnitts 120, die der Oberfläche des Filtermediums 106 abgewandt sind, an den entsprechenden freien Seiten der Klebstoffabschnitte 122a des jeweils gegenüberliegenden Mediumabschnitts 120 an.

Mittels der aneinander anliegenden Klebstoffabschnitte 122a werden benachbarte Mediumabschnitte 120 eines Faltenzwischenraums 148 gegeneinander abgestützt und in Form gehalten. Außerdem bilden die Klebstoffabschnitte 122 Begrenzungen für die Kanalabschnitte 124, die in Figuren 3, 4 und 8 bis 15 gezeigt sind.

Auf der Reinseite 104 liegen, wie auf der Rohseite 105, die freien Seiten der dortigen Klebstoffabschnitte 122b eines reinseitigen Faltenzwischenraums 148b flächig aneinander an und verhindern so ein Kollabieren der reinseitigen Faltenzwischenräume 148b.

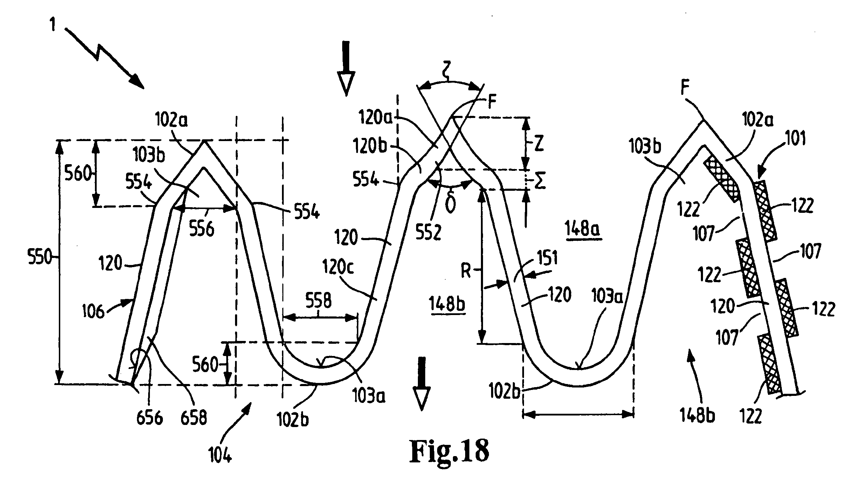

In Figur 18 ist ein Schnitt eines weiteren Ausführungsbeispiels eines Filterelements 1 gezeigt, bei dem die rohseitigen Faltenspitzen 102a ähnlich wie bei dem Ausführungsbeispiel aus Figur 7 mehrstufig geformt sind. Die Gesamtfaltenhöhe 550 beträgt etwa 5 cm bis 40 cm, insbesondere 20 cm bis 40 cm. Die Dicke 151 des Filtermediums 106 beträgt etwa 0,5 mm.

Die Filtermediumabschnitte 120, welche sich beidseitig der rohseitigen Faltenspitzen 102a zu den benachbarten rohseitigen Faltengründen 103a erstrecken, weisen jeweils am Ende eines ersten Bereichs 120a in einem Abstand Z von der Faltkante F eine erste Biegung 552 zur Rohseite 105 hin auf. Die Ausdehnung Z des ersten Bereichs 120a beträgt etwa 5 mm. Die ersten Bereiche 120a schließen einen Winkel ζ von etwa 5° ein. Sie können stattdessen auch einen Winkel ζ von weniger als 5° oder zwischen 5° und etwa 10° einschließen.

In einem Abstand Σ von der ersten Biegung 552 weisen die Filtermediumabschnitte 120 eine zweite Biegung 554 zur Reinseite 104 hin auf. Die Ausdehnung Σ eines zweiten Bereichs 120b zwischen der ersten Biegung 552 und der zweiten Biegung 554 beträgt etwa 5 mm. Die zweiten Bereiche 120b schließen einen Winkel δ von etwa 24° ein. Sie können stattdessen auch einen Winkel δ zwischen 10° und 24° oder zwischen 24° und 40° einschließen.

Die Ausdehnungen Σ und/oder Z können auch weniger als 5 mm oder bis zu etwa 10 mm betragen.

Im Anschluss an den zweiten Bereich 120b erstrecken sich jeweilige dritte Bereiche 120c bis zu den rohseitigen Faltengründen 103a. Die dritten Bereiche 120c schließen einen Winkel von etwa 0,2° ein. Sie können stattdessen auch einen anderen Winkel vorzugsweise zwischen etwa -5° und etwa +5° einschließen.

Die rohseitigen Faltgründe 103a haben ein zu der jeweiligen rohseitigen Faltkante 102a spitz zulaufendes, etwa V-förmiges Profil. Im Unterschied dazu haben die reinseitigen Faltgründe 103b ein etwa U-förmiges Profil. Reinseitige Filtergrundbreiten 556 der reinseitigen Filtergründe 103b jeweils auf Höhe der beiden zweiten Biegungen 554 in einer Distanz 560 von der entsprechenden rohseitigen Faltkante 102a sind kleiner als rohseitige Filtergrundbreiten 558 der rohseitigen Filtergründe 103a in der entsprechenden Distanz 560 von den reinseitigen Faltkanten 102b.

Die Form der rohseitigen Faltspitzen 102a entsteht bei der Herstellung dadurch, dass das Filtermedium 106 zunächst entlang der Faltkanten F gefaltet wird und anschließend in den ersten Bereichen 120a gequetscht wird. Dabei wird das Material des Filtermediums 106 in den ersten Bereich 120a komprimiert und es entstehen gleichzeitig die ersten Biegungen 552 und die zweiten Biegungen 554.

Zusätzlich können optional, wie beispielhaft in Figur 18 auf dem Mediumabschnitt 120 ganz rechts gezeigt, ähnlich wie bei den Ausführungsbeispielen in Figuren 1 bis 3, 4 und 8 bis 17, auf den Mediumabschnitten 120 auf der Rohseite 105 und/oder der Reinseite 104 Klebstoffabschnitte 122 und Klebstoffunterbrechungen 107 entlang von entsprechenden Klebstoffspuren 101 angeordnet sein.

Ferner können optional, wie beispielhaft in Figur 18 an dem Mediumabschnitt 120 ganz links gezeigt, die Mediumabschnitte 120 ähnlich wie bei den weiter unten in Figuren 19 bis 25 beschriebenen Ausführungsbeispielen, auf der Reinseite 105 Senken 656 aufweisen, welche auf den Rohseiten 104 entsprechende Erhebungen 658 realisieren.

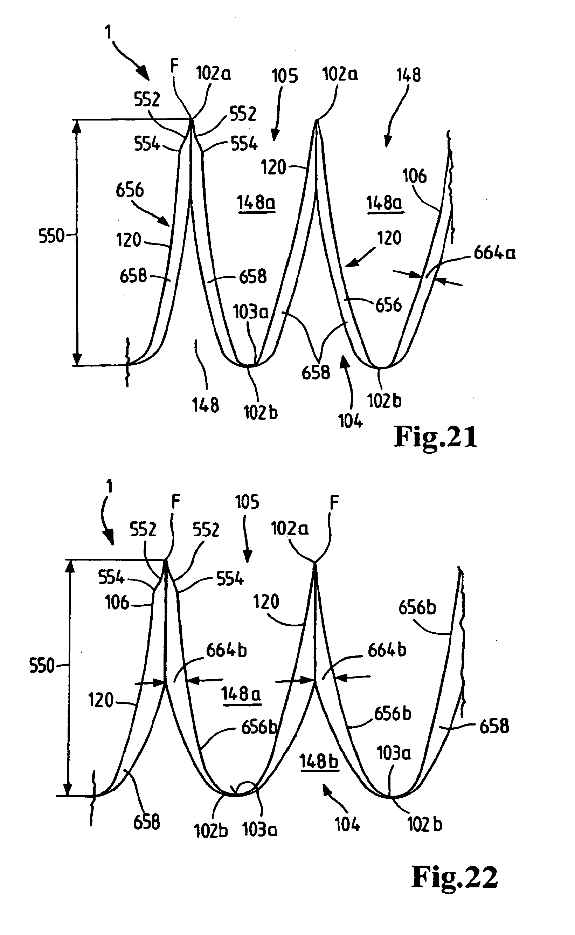

In Figur 19 ist ein Ausschnitt eines Filterelements 1 gemäß einem weiteren Ausführungsbeispiel gezeigt. Auf der Rohseite 105 ist das Filtermedium 106 zu einer Mehrzahl von länglichen Senken 656 geprägt. Die Senken 656 erstrecken sich zwischen den rohseitigen Faltenspitzen 102a und den rohseitigen Faltengründen 103a senkrecht zu den Faltkanten F. Die Senken 656 haben jeweils eine Tiefe 664a von etwa 1 mm. Eine Breite 666 der Senken 656 in Richtung der Faltkanten F beträgt etwa 25 mm bis 35 mm. Die Tiefe 664 der Senken 656 ist, wie in Figur 21 im Querschnitt gezeigt, über die Höhe der Falten im Wesentlichen konstant. Alternativ können, wie in Figur 22 gezeigt, die Tiefen 664b der Senken 656b von den rohseitigen Faltenspitzen 102a zu den rohseitigen Faltgründen 103a hin abnehmen.

Bei den in Figuren 21 und 22 jeweils linken Falten sind beispielhaft die rohseitigen Faltenspitzen 102a ähnlich wie bei den Ausführungsbeispielen aus Figuren 7 und 18 gequetscht und mehrfach abgestuft.

Die Senken 656 sind als Rillierungen realisiert, welche auf der Reinseite 104 entsprechende Erhebungen 658 bilden. In dem rohseitigen Faltenzwischenraum 148a liegen sich die Senken 656 der beiden Mediumabschnitte 120, die den Faltenzwischenraum 148a begrenzen, direkt gegenüber und bilden jeweils einen Strömungskanal 660 mit. Die Strömungskanäle 660 erstrecken sich senkrecht zu den Faltkanten F.

Im Bereich der in Figur 19 rechten Senken 656 ist beispielhaft jeweils ein erfindungsgemäßen Stützrücken 662 in die Mediumabschnitte 120 eingeformt. Die Stützrücken 662 erheben sich zur Reinseite 104 hin.

Bei dem in Figur 19 linken Strömungskanal 660 sind beispielhaft anstelle der Stützrücken 262 auf der Reinseite 104 jeweils eine Leimraupe 622 angeordnet, die alleine nicht unter die Erfindung fallen. Die Leimraupen 622 dienen der Stabilisierung des Strömungskanals 660.

Die Stützrücken 662 können auch mit den Leimraupen 622 kombiniert sein, beispielsweise derart, dass sich die Leimraupen 622 auf den Stützrücken 662 befinden.

Zwischen den Strömungskanälen 660 ist auf der Rohseite 105 jeweils ein Klebstoffabschnitt 122 mit Klebstoffunterbrechungen 107 angeordnet. Diese Klebstoffabschnitte 122 verlaufen ähnlich den Ausführungsbeispielen aus Figuren 3, 4 und 8 bis 18 entlang von Klebstoffspuren 101.

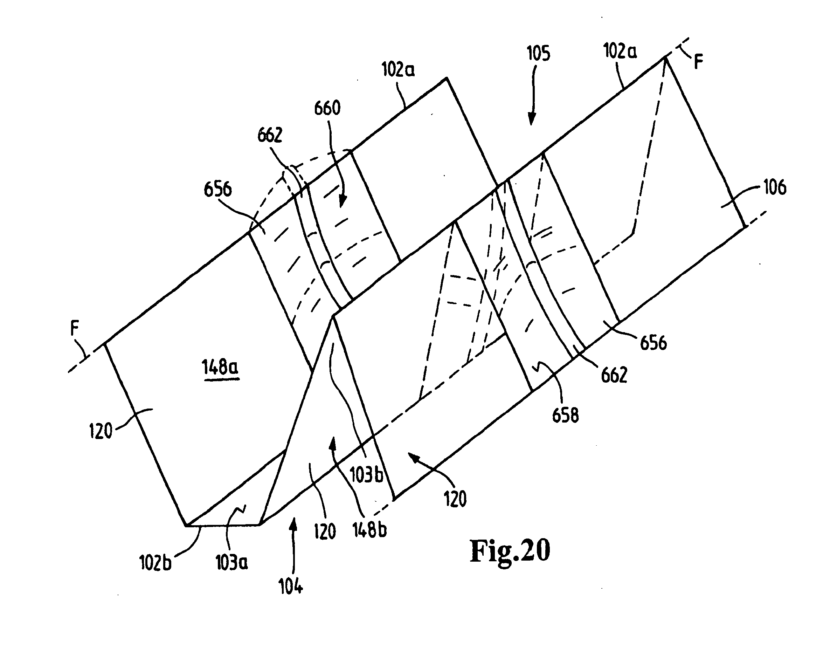

In Figur 20 ist ein weiteres Ausführungsbeispiel eines Filterelements 1 gezeigt, welches zu dem Filterelement 1 aus Figur 19 ähnlich ist. Im Unterschied zu dem Filterelement 1 aus Figur 19 sind die rohseitigen Faltengründe 103a bei dem Ausführungsbeispiel in Figur 20 im Vergleich zu den reinseitigen Faltengründen 103b aufgeweitet. Insgesamt haben so die Faltenzwischenräume 148a und 148b eine ähnliche Wirkung wie die Faltenzwischenräume 148a und 148b des Filterelements 1 aus Figur 18.

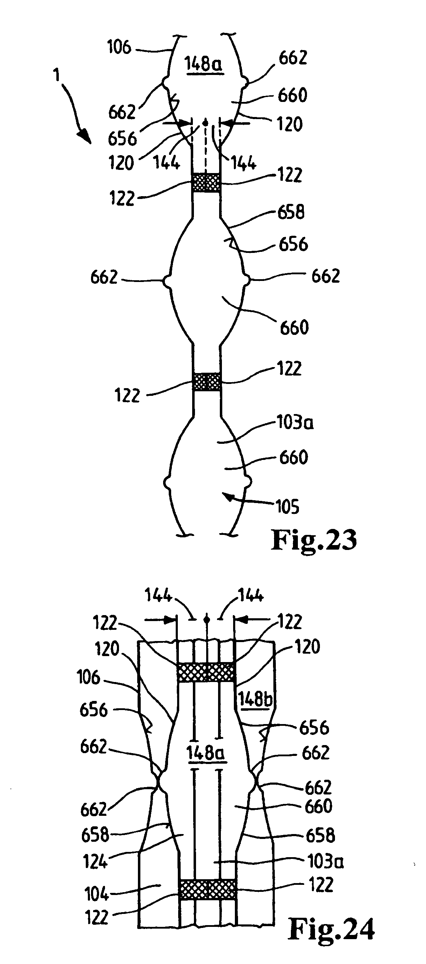

In Figur 23 ist ein Schnitt des Filterelements 1 aus Figur 19 parallel zu einer Ebene durch die rohseitigen Faltenspitzen 102a gezeigt. Im Bereich eines der rohseitigen Faltenzwischenräume 148a liegen die Klebstoffabschnitte 122 der gegenüberliegenden Mediumabschnitte 120, ähnlich wie bei dem Ausführungsbeispiel aus Figur 17, flächig aneinander an und begrenzen so die Strömungskanäle 660.

In Figur 24 ist ein Filterelement 1, welches ähnlich ist zu dem Filterelement 1 aus Figur 20, in ebenfalls einem Schnitt parallel zu einer Ebene durch die rohseitigen Faltenspitzen 102a gezeigt. In den reinseitigen Faltenzwischenräumen 148b liegen die Stützrücken 662 der Mediumabschnitte 120 aneinander an und stabilisieren so die Falten und das Filterelement 1. Im Unterschied zu dem Ausführungsbeispiel aus Figur 20 sind bei dem Ausführungsbeispiel aus Figur 24, wie bei dem Ausführungsbeispiel aus Figur 19, in den rohseitigen Faltenzwischenräumen 148a beidseitig der Strömungskanäle 660 Klebstoffabschnitte 122 mit Klebstoffunterbrechungen 107 vorgesehen. Die Ausdehnungen 144 der Klebstoffabschnitte 122 senkrecht zu den jeweiligen rohseitigen Oberflächen des Filtermediums 106 variiert bei den Ausführungsbeispielen aus den Figuren 23 und 24 analog zu den Ausführungsbeispielen aus Figuren 16 und 17, so dass die Klebstoffabschnitte 122 flächig aneinanderliegen und sich aneinander abstützen.

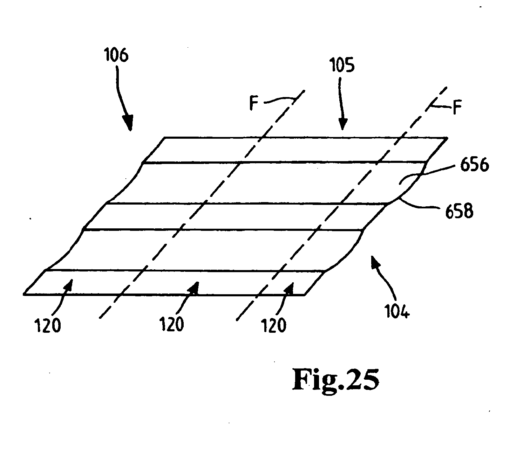

In Figur 25 ist ein ungefaltetes Filtermedium 106 gezeigt, welches mit Rillierungen zur Realisierung der Senken 656 und der Erhebungen 658 entsprechend den Ausführungsbeispielen aus Figuren 19 bis 24 versehen ist. Die Rillierungen verlaufen senkrecht zu den Faltkanten F. Die Erhebungen 658 und Senken 656 können auch durch Rillierungen realisiert werden, die an den Faltkanten F unterbrochen sind.

Bei allen oben beschriebenen Ausführungsbeispielen eines Filterelements 1 und eines Verfahrens zur Herstellung eines Filterelements 1 sind u.a. folgende Modifikationen möglich:
Die Anordnungen der Klebstoffabschnitte 122 und der Klebstoffunterbrechungen 107 entlang der Klebstoffspuren 101, wie sie in Figuren 3, 4 und 8 bis 16 beschrieben sind, die Ausgestaltungen der rohseitigen Faltenspitze 102, wie sie in Figuren 7 und 18 beschrieben sind, und die Anordnungen von Senken 656 und Erhebungen 658 am Filtermedium 106, wie sie in Figuren 19 bis 25 beschrieben sind, können bei einem Filterelement 1 sinnvoll miteinander kombiniert werden.

Die geraden Klebstoffspuren 101 können statt senkrecht auch schräg oder abschnittsweise schräg zu den Faltkanten F verlaufen.

Die Klebstoffabschnitte 122 und die Klebstoffunterbrechungen 107 können statt entlang der geraden Klebstoffspuren 101 auch entlang von andersartig verlaufenden Klebstoffspuren, z. B. gewundenen oder mäandrischen Klebstoffspuren, angeordnet sein.

Die Durchgänge 126 können statt V-förmig, W-förmig oder zickzackförmig auch in anderer Weise wenigstens abschnittsweise nichtparallel zu den Faltkanten F verlaufen.

Bei den in Figuren 16 und 17 gezeigten Ausführungsbeispielen kann auch jeder zweite Mediumabschnitt frei von Klebstoffabschnitten sein. Die Ausdehnung 144 der Klebstoffabschnitte 122 auf den anderen Mediumabschnitten 120 kann sich in dem Fall über den gesamten Faltenzwischenraum erstreckend. Die freien Seiten der Klebstoffabschnitte 192 liegen dann flächig an der jeweils gegenüberliegenden, nicht mit Klebstoffabschnitten versehenen Oberfläche des dortigen Mediumabschnitts 120 an.

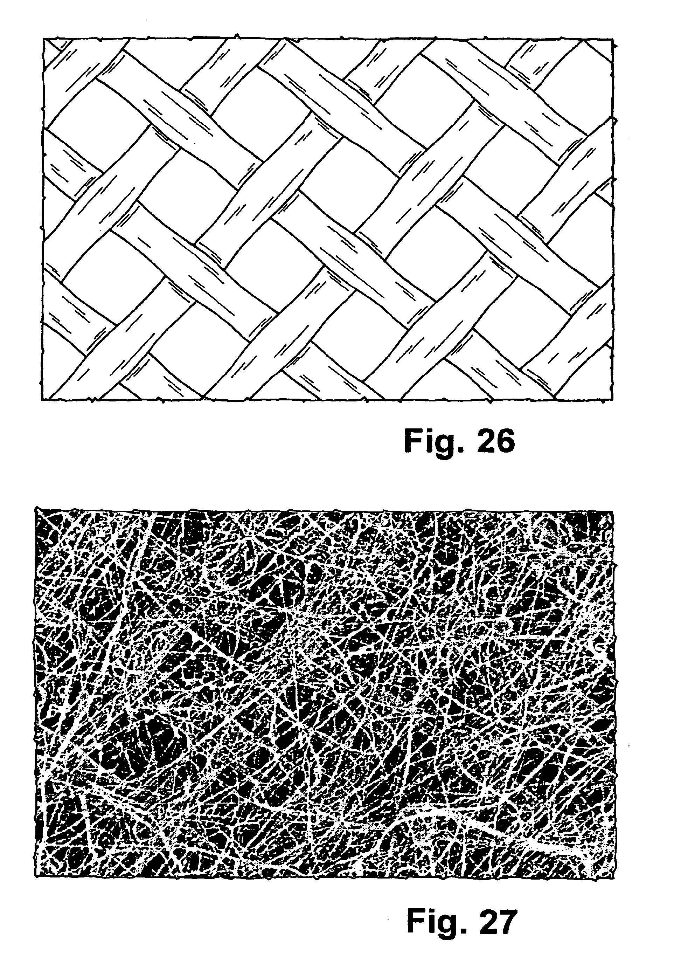

Die Figuren 26 - 34 zeigen beispielhaft einige Ausführungsformen von Filtermedien, welche neben weiteren Filtermedien für einen erfindungsgemäßen Filter verwendet werden können.

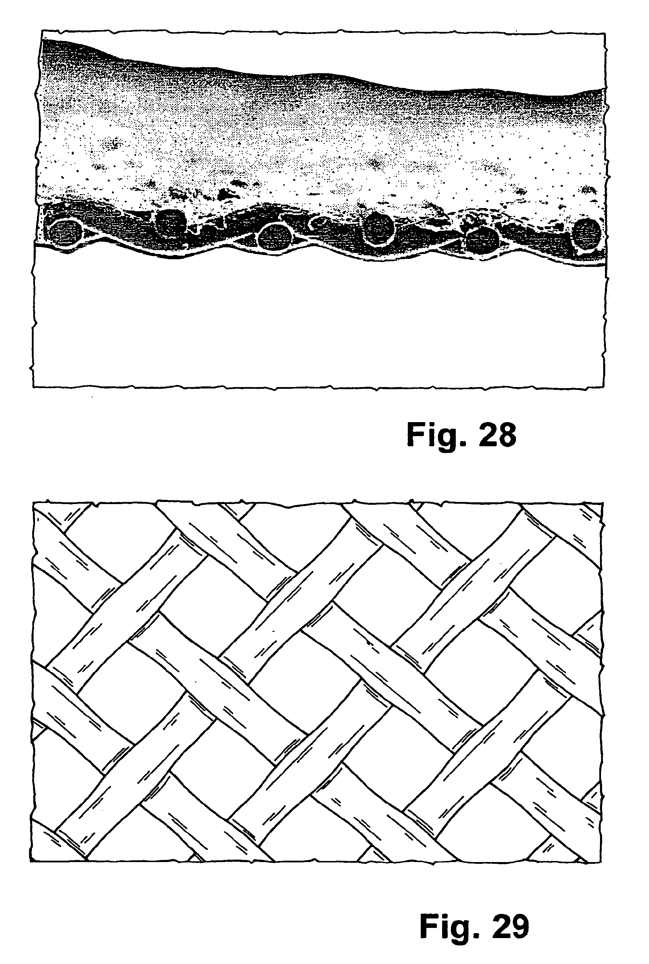

FIG. 26 zeigt ein unbeschichtetes PA 6.6-Gitter mit einer Maschenweite von 100 ± 10 µm, FIG. 27 ein solches Gitter mit einer Beschichtung aus Nanofasern. FIG. 28 zeigt das beschichtete Gitter im Querschnitt. Die Luftdurchlässigkeit des unbeschichteten Gitters beträgt - 10.000 l/(m2s), die des beschichteten Gitters ∼ 800-1.500 l/(m2s). Die Siebfeinheit beträgt 69,9 n/cm, die Dicke 70 µm und das Flächengewicht 24 g/cm2. In FIG. 29 ist ein PA 6.6-Gitter gezeigt, das eine Maschenweite von 102 ± 6 µm aufweist.

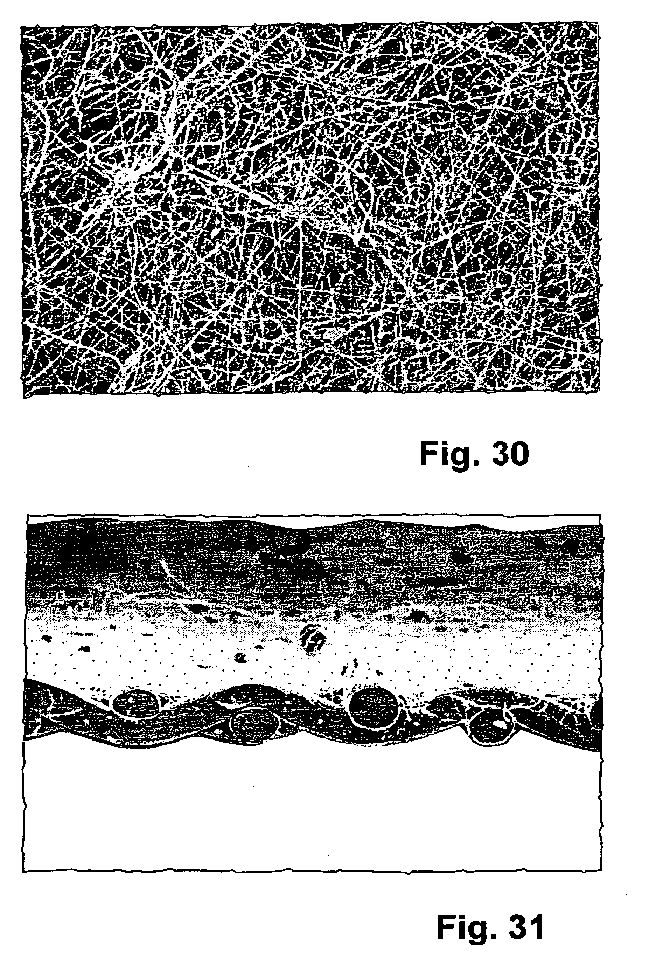

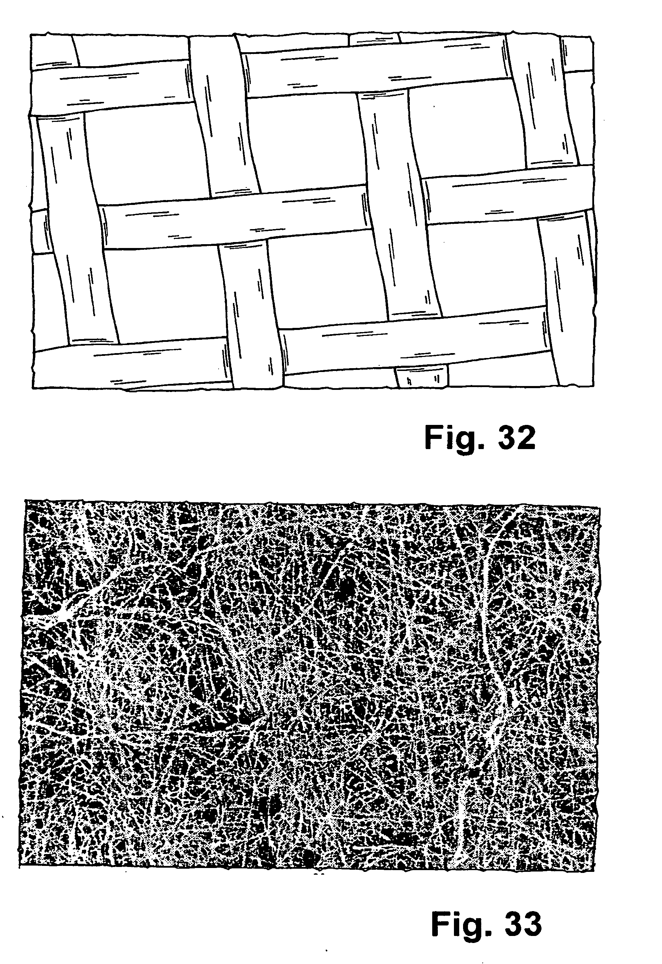

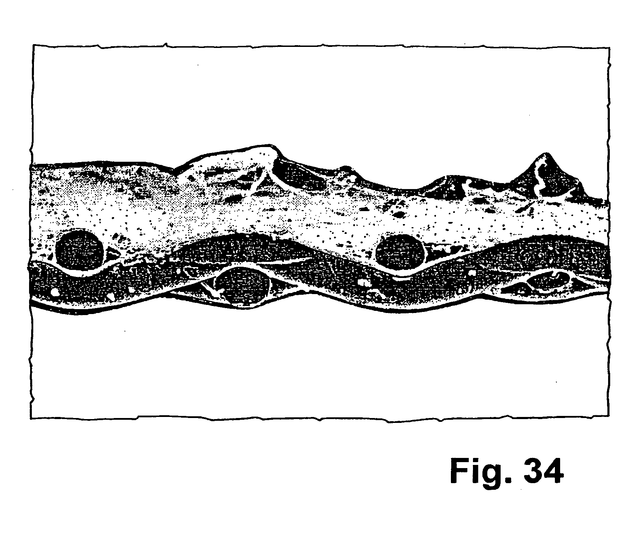

FIG. 30 zeigt das beschichtete Gitter und FIG. 31 eine Querschnittansicht des beschichteten Gitters. Die Luftdurchlässigkeit des unbeschichteten Gitters beträgt ∼ 8.600 l/(m2s), die des beschichteten Gitters - 1.500 l/(m2s). Die Siebfeinheit beträgt 65 n/cm, die Dicke 80 µm und das Flächengewicht 35 g/cm2. Ein weiteres PA 6.6-Gitter ist in den FIG. 32 bis 34 gezeigt. Hier beträgt die Maschenweite 150 ± 9 µm. Die Luftdurchlässigkeit des unbeschichteten Gitters beträgt ∼ 11.000 l/(m2s), die des beschichteten Gitters ∼ 650-840 l/(m2s). Die Siebfeinheit beträgt 47 n/cm, die Dicke 95 µm und das Flächengewicht 35 g/cm2. FIG. 32 zeigt das unbeschichtete Gitter, FIG. 33 das beschichtete Gitter und FIG. 34 das beschichtet Gitter im Querschnitt.

## Patentansprüche

1. Filterelement für einen Filter zur Filtrierung von Fluiden, insbesondere von Gasen, insbesondere von Ansaugluft, Kraftstoff, Harnstoff-Lösung oder Motoröl insbesondere einer Brennkraftmaschine insbesondere eines Kraftfahrzeugs, oder Umgebungsluft zur Einleitung in Belüftungssysteme von Gebäuden oder Fahrzeugen, wobei das Filterelement (1) ein zickzackförmig gefaltetes Filtermedium (14; 106) mit einer Rohseite (105) und einer Reinseite (104) aufweist, wobei auf der Rohseite (105) eine Mehrzahl von länglichen Senken (656) in das Filtermedium (14; 106) geformt ist, die sich zwischen rohseitigen Faltenspitzen (102a) und rohseitigen Faltengründen (103a) etwa senkrecht zu Faltkanten (F) des Filtermediums (14; 106) erstrecken und auf der Reinseite (104) entsprechende Erhebungen (658) realisieren, derart, dass sich in einem rohseitigen Faltenzwischenraum (148a) jeweils zwei Senken (656) auf den beiden den Faltenzwischenraum (148a) begrenzenden Mediumabschnitten (120) direkt gegenüber liegen und jeweils einen Strömungskanal (660) mit bilden, **dadurch gekennzeichnet, dass** im Zentrum wenigstens einer der Senken (656) ein Stützrücken (662) geformt ist, welcher sich entlang der Senke (656) und der entsprechenden Erhebung (658) erstreckt und auf der Rohseite (105) eine Vertiefung und auf der Reinseite (104) eine Erhöhung bildet.

2. Filterelement nach Anspruch 1, **dadurch gekennzeichnet, dass** auf der Reinseite (104) im Zentrum wenigstens einer der Erhebungen (658) ein Klebstoffabschnitt (622) angeordnet ist, welcher sich entlang der Erhebung (658) erstreckt.

3. Filterelement nach einem der vorigen Ansprüche, **dadurch gekennzeichnet, dass** sich in einem reinseitigen Faltenzwischenraum (148b) jeweils zwei Erhebungen (658), insbesondere Stützrücken (662) oder Klebstoffabschnitte (622), auf den beiden den Faltenzwischenraum (148b) begrenzenden Mediumabschnitten (120) aneinander abstützen.

4. Filterelement nach einem der vorigen Ansprüche, **dadurch gekennzeichnet, dass** die Tiefen (664a) der Senken (656) über die Höhe (550) der Falten im Wesentlichen konstant ist.

5. Filterelement nach einem der Ansprüche 1 bis 3, **dadurch gekennzeichnet, dass** die Tiefen (664b) der Senken (656) von den Faltkanten (F) zu den Faltengründen (103a) hin abnimmt.

6. Filterelement nach einem der vorigen Ansprüche, **dadurch gekennzeichnet, dass** zwischen zwei benachbarten Strömungskanälen (660) jeweils wenigstens ein Klebstoffabschnitt (122) auf der Rohseite (105) des Filtermediums (106) angeordnet ist, der etwa senkrecht zu der Richtung der Faltkanten (F) verläuft.

7. Filterelement nach Anspruch 6, **dadurch gekennzeichnet, dass** die Ausdehnung (144) des wenigstens einen Klebstoffabschnitts (122) senkrecht zum Filtermedium (14; 106) variiert, so dass der Klebstoffabschnitt (122) bei dem gefalteten Filtermedium (14; 106) mit seiner dem Filtermedium (14; 106) abgewandten freien Seite an einer entsprechenden freien Seite eines in dem Faltenzwischenraum (148a) gegenüberliegenden Klebstoffabschnitts (122) oder an der Oberfläche des gegenüberliegenden Mediumabschnitts (120) flächig anliegt.

8. Filterelement nach einem der vorigen Ansprüche, **dadurch gekennzeichnet, dass** die Senken (656) und Erhebungen (658) in Form von Rillierungen im ungefalteten Filtermedium (106) realisiert sind, die senkrecht zu den Faltkanten (F) verlaufen.

9. Filterelement nach einem der vorigen Ansprüche, **dadurch gekennzeichnet, dass** Filtermediumabschnitte (120), welche sich beidseitig der rohseitigen Faltenspitzen (102a) zu den benachbarten rohseitigen Faltengründen (103a) erstrecken, jeweils von den rohseitigen Faltenspitzen (102a) aus betrachtet eine erste Biegung (552) zur Rohseite (105) hin und dahinter eine zweite Biegung (554) zur Reinseite (104) hin aufweisen.

10. Filter zur Filtrierung von Fluiden, insbesondere von Gasen, insbesondere von Ansaugluft, Kraftstoff, Harnstoff-Lösung oder Motoröl insbesondere einer Brennkraftmaschine insbesondere eines Kraftfahrzeugs, oder Umgebungsluft zur Einleitung in Belüftungssysteme von Gebäuden oder Fahrzeugen, mit einem Filterelement (1) nach einen der vorigen Ansprüche.

## Claims

1. Filter element for a filter for filtering fluids, in particular gases, in particular intake air, fuel, urea solution or motor oil in particular of an internal combustion engine in particular of a motor vehicle, or ambient air for introduction into venting systems of buildings or vehicles, the filter element (1) featuring a zigzag-folded filter medium (14; 106) having a raw side (105) and a clean side (104), a plurality of elongated depressions (656) being formed on the raw side (105) into the filter medium (14; 106) which extend between raw-side fold tips (102a) and raw-side fold bases (103a) approximately perpendicularly to the fold edges (F) of the filter medium (14; 106) and realize corresponding projections (658) on the clean side (104) in such a way that in a raw-sided intermediate fold space (148a) two depressions each (656) face each other directly on the two media sections (120) defining the intermediate fold space (148a) and form a flow channel each (660), **characterized in that** in the center of at least one of the depressions (656) a support ridge (662) is formed, which extends along the depression (656) and the corresponding projection (656) and forms a recess on the raw side (105) and a projection on the clean side (104).

2. Filter element according to claim 1, **characterized in that** on the clean side (104) in the center an adhesive section (622), which extends along the projection (658), is allocated to at least one of the projections (658).

3. Filter element according to one of the above claims, **characterized in that** in a clean-side intermediate fold space (148b) two projections each (658), in particular support ridges (662) or adhesive sections (622), support each other on the two media sections (120) defining the intermediate fold space (148b).

4. Filter element according to one of the above claims, **characterized in that** the depth (664a) of the depressions (656) remains substantially constant over the height (550) of the folds.

5. Filter element according to one of the claims 1 to 3, **characterized in that** the depth (664a) of the depressions (656) diminishes between the fold edges (F) and the fold bases (1 03a).

6. Filter element according to one of the above claims, **characterized in that** between two adjacent flow channels (660) at least one adhesive section each (122), which extends approximately perpendicularly to the direction of the fold edges (F), is disposed on the raw side (105) of the filter medium (106).

7. Filter element according to claim 6, **characterized in that** the extension (144) of the at least one adhesive section (122) varies perpendicularly to the filter medium (14; 106) so that the adhesive section (122), when the filter medium (14; 106) is folded, is applied with its free side facing away from the filter medium (14; 106) over the whole surface on an corresponding free side of an adhesive section (122) that is oppositely positioned in the intermediate fold space (148a) or on the surface of the oppositely positioned medium section (120).

8. Filter element according to one of the above claims, **characterized in that** the depressions (656) and projections (658) are realized in the shape of grooves in the unfolded filter medium (106) which extend perpendicularly to the fold edges (F).

9. Filter element according to one of the preceding claims, **characterized in that** the filter medium sections (120) that extend on both sides from the raw-side fold tips (102a) to the neighboring raw-side fold bases (103a), viewed from the raw-side fold tips (102a), respectively, have a first bend (552) toward the raw side (105) and therebehind a second bend (554) toward the clean side (104).

10. Filter for filtration of fluids, in particular of gases, in particular of intake air, fuel, urea solution or motor oil, in particular of an internal combustion engine, in particular of a motor vehicle, or ambient air for introduction into venting systems of buildings or vehicles, having a filter element (1) according to one of the above claims.

## Revendications

1. Élément filtrant pour un filtre, conçu pour le filtrage de fluides, notamment de gaz, notamment d'air d'aspiration, de carburant, de solution d'urée ou d'huile de moteur, notamment d'un moteur à combustion interne notamment d'un véhicule automobile, ou d'air ambiant destiné à être introduit dans des systèmes de ventilation de bâtiments ou de véhicules, l'élément filtrant (1) présentant un milieu filtrant (14 ; 106) plié en accordéon avec un côté brut (105) et un côté pur (104), plusieurs cavités longitudinales (656) étant formées du côté brut (105) dans le milieu filtrant (14 ; 106), lesquelles s'étendent entre des crêtes de plis (1 02a) du côté brut et des creux de plis (103a) du côté brut à peu près à la verticale des arêtes de pliage (F) du milieu filtrant (14 ; 106) et forment du côté pur (104) des éminences (658) correspondantes de sorte que, dans un interstice de pliage (148a) du côté brut, respectivement deux cavités (656) se font directement face sur les deux sections de milieu (120) limitant l'interstice de pliage (148a) et forment respectivement un canal d'écoulement (660), **caractérisé en ce qu'**au centre d'au moins une cavité (656) est formé un dos d'appui (662) qui s'étend le long de la cavité (656) et de l'éminence (658) correspondante et forme un creux du côté brut (105) et une éminence du côté pur (104).

2. Élément filtrant selon la revendication 1, **caractérisé en ce qu'**une section de colle (622) est disposée du côté pur (104), au centre d'au moins une des éminences (658), laquelle s'étend le long de l'éminence (658).

3. Élément filtrant selon l'une des revendications précédentes, **caractérisé en ce que** dans un interstice de pliage (148b) du côté pur, respectivement deux éminences (658), notamment des dos d'appui (662) ou des sections de colle (622), s'appuient l'une sur l'autre sur les deux sections de milieu (120) limitant l'interstice de pliage (148b).

4. Élément filtrant selon l'une des revendications précédentes, **caractérisé en ce que** la profondeur (664a) des cavités (656) est essentiellement constante sur la hauteur (550) des plis.

5. Élément filtrant selon l'une des revendications 1 à 3, **caractérisé en ce que** la profondeur (664b) des cavités (656) diminue entre les arêtes de pliage (F) et les creux des plis (1 03a).

6. Élément filtrant selon l'une des revendications précédentes, **caractérisé en ce qu'**entre deux canaux d'écoulement (660) voisins, respectivement au moins une section de colle (122) évoluant de manière à peu près verticale par rapport au sens des arêtes de pliage (F) est disposée du côté brut (105) du milieu filtrant (106).

7. Élément filtrant selon la revendication 6, **caractérisé en ce que** l'ampleur (144) de la section de colle (122), au moins au nombre d'une, varie en sens vertical par rapport au milieu filtrant (14 ; 106) de manière à ce que la face libre opposée au milieu filtrant (14 ; 106) de la section de colle (122) du milieu filtrant plié (14 ; 106) soit appliquée sur toute sa surface sur une face libre correspondante d'une section de colle opposée (122) dans l'interstice de pliage (148a) ou sur la surface de la section du milieu (120) opposée.

8. Élément filtrant selon l'une des revendications précédentes, **caractérisé en ce que** les creux (656) et les éminences (658) sont réalisés sous forme de rainures dans le milieu filtrant (106) non plié qui évoluent verticalement aux arêtes de pliage (F).

9. Élément filtrant selon l'une des revendications précédentes, **caractérisé en ce que** des sections de milieu filtrant (120) qui s'étendent des deux côtés entre des crêtes de plis (102a) du côté brut et les creux de plis (103a) voisins du côté brut, considéré respectivement des crêtes de plis (102a) du côté brut, présentent une première courbure (552) vers le côté brut (105) et, derrière cette première courbure, une deuxième courbure (554) vers le côté pur (104).

10. Filtre conçu pour le filtrage de fluides, notamment de gaz, notamment d'air d'aspiration, de carburant, de solution d'urée ou d'huile de moteur, notamment d'un moteur à combustion interne notamment d'un véhicule automobile, ou d'air ambiant destiné à être introduit dans des systèmes de ventilation de bâtiments ou de véhicules, avec un élément filtrant (1) selon l'une des revendications précédentes.
